# EUROPÄISCHE PATENTANMELDUNG

(11) **EP 3 118 481 A1**
(43) Veröffentlichungstag der Anmeldung: **18.01.2017**
(21) Anmeldenummer: 15176457.8
(22) Anmeldetag: 13.07.2015
(51) Int. Cl.: F16H 3/66

(54) **AUTOMATGETRIEBE**

(71) Anmelder: ZF Friedrichshafen AG, 88046 Friedrichshafen (DE)
(72) Erfinder: Ziemer, Peter, 88069 Tettnang (DE)

(57) **Zusammenfassung**

Die Erfindung betrifft ein Automatgetriebe mit vier Planetenradsätzen (RS1, RS2, RS3, RS4) und sieben Schaltelemente (C, B, D, E, A, M, H) zum Schalten verschiedener Übersetzungsverhältnisse zwischen einer Antriebswelle (AN) und einer Abtriebswelle (AB). Der erste und zweite Planetenradsatz (RS1, RS2) bilden einen mit der Antriebswelle (AN) verbindbaren Vorschaltradsatz (VS), der dritte und vierte Planetenradsatz (RS3, RS4) einen mit Antriebswelle (AN) und Abtriebswelle (AB) verbundenen Hauptradsatz (HS). Vorschaltradsatz (VS) und Hauptradsatz (HS) sind über genau eine Verbindungswelle (W) miteinander verbunden. Das erste, zweite, dritte, vierte und fünfte Schaltelement (C, B, D, E, A) sind ständig mit dem Vorschaltradsatz (VS) direkt verbunden, während das sechste und siebte Schaltelement (M, H) ständig mit dem Hauptradsatz (HS) direkt verbunden sind. Es wird vorgeschlagen, dass Vorschaltradsatz (VS) und Hauptradsatz (HS) jeweils fünf drehbare Wellen (wv1, wv2, wv3, wv4, wv5; wh1, wh2, wh3, wh4, wh5) aufweisen.

## Beschreibung

Die vorliegende Erfindung betrifft ein Automatgetriebe in Planetenbauweise nach dem Oberbegriff des Anspruchs 1.

Automatisch schaltbare Fahrzeuggetriebe in Planetenbauweise sind im Stand der Technik bereits vielfach beschrieben und unterliegen einer permanenten Weiterentwicklung und Verbesserung. So sollen diese Getriebe eine ausreichende Anzahl von Gängen und eine für Kraftfahrzeuge gut geeignete Übersetzung mit hohen Gesamtspreizung, günstigen Stufensprüngen und eine für den Anwendungsfall hinreichend große Anfahrübersetzung aufweisen. Andererseits sollen diese Getriebe einen möglichst geringen Bauaufwand, insbesondere eine geringe Anzahl an Schaltelementen erfordern. Üblicherweise sollen zudem bei sequentieller Schaltweise so genannte Gruppenschaltungen vermieden werden, also bei Schaltungen in den nächstfolgend höheren oder nächstfolgend niedrigeren Gang jeweils nur ein zuvor geschlossenes Schaltelement geöffnet und ein zuvor geöffnetes Schaltelement geschlossen wierden.

Derartige Automatgetriebe sind beispielsweise aus der EP 1373756 B1 bekannt. In den Figuren 4 und 5 dieser Patentschrift werden Radsatzsysteme mit vier einzelnen einfachen Planetenradsätzen und sieben Schaltelementen vorgeschlagen, bei denen durch selektives Schließen von jeweils drei dieser sieben Schaltelemente insgesamt elf Vorwärtsgänge gruppenschaltungsfrei schaltbar sind und auch ein Rückwärtsgang schaltbar ist. Jeder dieser vier Planetenradsätze umfasst ein Sonnenrad, ein Hohlrad und einen Planetenradträger mit an diesem Planetenradträger drehbar gelagerten Planetenrädern, die mit Sonnenrad und Hohlrad kämmen. Zwei der vier Planetenradsätze bilden einen mit der Antriebswelle des Getriebes verbindbaren Vorschaltradsatz, während die anderen zwei der vier Planetenradsätze einen ständig mit der Abtriebswelle des Getriebes verbundenen Hauptradsatz bilden. Dabei sind Vorschaltradsatz und Hauptradsatz jeweils als so genanntes Zwei-Steg-Vier-Wellen-Getriebe ausgeführt. Der Vorschaltradsatz ist über genau eine Verbindungswelle ständig mit dem Hauptradsatz verbunden, wobei diese Verbindungswelle selber mit keinem der sieben Schaltelemente direkt verbunden ist. Fünf der sieben Schaltelemente sind ständig mit dem Vorschaltradsatz direkt verbunden, während die anderen zwei der sieben Schaltelemente ständig mit dem Hauptradsatz direkt verbunden sind. Wesentlich ist, dass eine der vier Wellen des Hauptradsatzes über eines der beiden mit dem Hauptradsatz direkt verbundenen Schaltelemente mit der Antriebswelle verbindbar ist, und dass eine andere der vier Wellen des Hauptradsatzes über das andere der beiden mit dem Hauptradsatz direkt verbundenen Schaltelemente am Getriebegehäuse festsetzbar ist. Hierdurch ergibt sich in Verbindung mit der verschiedenen vorgeschlagenen Kopplungen der beiden Einzel-Planetenradsätze des Hauptradsatzes untereinander stets, dass in mindestens drei der vorhandenen Vorwärtsgänge beim Schließen eines oder beider der mit dem Hauptradsatz ständig verbundenen Schaltelemente beide Einzel-Planetenradsätze des Hauptradsatzes gleichzeitig drehmomentführend sind.

Ein gattungsgemäßes Automatgetriebe ist aus der US 2015/0099603 A1 bekannt. In Figur 3 dieser Offenlegungsschrift wird ein Radsatzsystem mit vier einzelnen einfachen Planetenradsätzen und sieben Schaltelementen vorgeschlagen, bei dem durch selektives Schließen von jeweils drei dieser sieben Schaltelemente insgesamt elf Vorwärtsgänge gruppenschaltungsfrei schaltbar sind und auch ein Rückwärtsgang schaltbar ist. Jeder dieser vier Planetenradsätze umfasst ein Sonnenrad, ein Hohlrad und einen Planetenradträger mit an diesem Planetenradträger drehbar gelagerten Planetenrädern, die mit Sonnenrad und Hohlrad kämmen. Auch hierbei bilden der erste und zweite Planetenradsatz einen mit der Antriebswelle des Getriebes verbindbaren Vorschaltradsatz, während der dritte und vierte Planetenradsatz einen ständig mit der Abtriebswelle des Getriebes verbundenen Hauptradsatz bilden. Auch hierbei ist der Vorschaltradsatz über genau eine Verbindungswelle, die ihrerseits mit keinem der sieben Schaltelemente direkt verbunden ist, ständig mit dem Hauptradsatz verbunden. Der als so genanntes Zwei-Steg-Vier-Wellen-Getriebe ausgeführte Vorschaltradsatz ist ständig mit dem ersten, zweiten, dritten, vierten und fünften Schaltelement direkt verbunden, während der Hauptradsatz ständig mit dem sechsten und siebten Schaltelement direkt verbunden ist. Wesentlich hierbei ist, dass das sechste Schaltelement im Kraftfluss zwischen dem Hohlrad des dritten Planetenradsatzes und dem Getriebegehäuse angeordnet ist, wobei das Hohlrad des dritten Planetenradsatzes seinerseits nicht als Koppelwelle zwischen dem dritten und vierten Planetenradsatz ausgebildet ist. Wesentlich hierbei ist auch, dass das siebte Schaltelement im Kraftfluss zwischen dem Hohlrad des vierten Planetenradsatzes und dem Planetenradträger des dritten Planetenradsatzes angeordnet ist, wobei das Hohlrad des vierten Planetenradsatzes seinerseits ebenfalls nicht als Koppelwelle zwischen dem dritten und vierten Planetenradsatz ausgebildet ist. Somit ist das sechste Schaltelement ständig mit dem dritten Planetenradsatz direkt verbunden ist, ohne mit dem vierten Planetenradsatz direkt verbunden zu sein, während das siebte Schaltelement ständig sowohl mit dem dritten als auch mit dem vierten Planetenradsatz direkt verbunden ist.

Der vorliegenden Erfindung liegt die Aufgabe zugrunde, ein alternatives Automatgetriebe der eingangs genannten Art mit einer Antriebswelle, einer Abtriebswelle, vier Planetenradsätzen und sieben Schaltelementen anzugeben, das vom Wirkungsgrad her vergleichbar gut ist. Zwei der vier Planetenradsätze sollen dabei einen mit der Antriebswelle verbindbaren Vorschaltradsatz bilden, der ständig mit fünf der sieben Schaltelemente direkt verbunden ist. Die anderen zwei der vier Planetenradsätze sollen einen ständig mit der Abtriebswelle verbundenen Hauptradsatz bilden, der ständig mit den übrigen zwei der sieben Schaltelementen direkt verbunden ist. Insbesondere sollen nur in maximal einem der Vorwärtsgänge beide Planetenradsätze des Hauptradsatzes drehmomentführend sein, wohingegen in den übrigen Vorwärtsgängen jeweils nur einer der beiden Planetenradsätze des Hauptradsatzes drehmomentführend und der andere der beiden Planetenradsätze des Hauptradsatzes lastlos sein soll.

Erfindungsgemäß gelöst wird diese Aufgabe durch ein Automatgetriebe mit den Merkmalen des Patentanspruchs 1. Weitere vorteilhafte Ausgestaltungen und Weiterbildungen der Erfindung gehen aus den Unteransprüchen hervor.

Demnach wird ein Automatgetriebe insbesondere für ein Kraftfahrzeug vorgeschlagen, welches ein Getriebegehäuse, eine drehbare Antriebswelle, eine drehbare Abtriebswelle, vier Planetenradsätze sowie sieben Schaltelemente zum Schalten verschiedener Übersetzungsverhältnisse zwischen Antriebswelle und Abtriebswelle umfasst. Dabei bilden der erste und zweite Planetenradsatz einen mit der Antriebswelle verbindbaren Vorschaltradsatz, während der dritte und vierte Planetenradsatz einen ständig mit Antriebswelle und Abtriebswelle verbundenen Hauptradsatz bilden. Dabei ist der Vorschaltradsatz über genau eine drehbare Verbindungswelle ständig mit dem Hauptradsatz verbunden.

Erfindungsgemäß ist vorgesehen, dass Vorschaltradsatz und Hauptradsatz jeweils fünf drehbaren Wellen aufweisen. Somit sind sowohl Vorschaltradsatz als auch Hauptradsatz beide als so genannte Zwei-Steg-Fünf-Wellen-Planetengetriebe ausgeführt.

In einer ersten bevorzugten Ausgestaltung der Erfindung ist vorgesehen, dass das erste, dritte und fünfte Schaltelement ständig mit dem Vorschaltradsatz direkt verbunden sind, ohne mit dem Hauptradsatz direkt verbunden zu sein, dass das zweite und vierte Schaltelement ständig mit Vorschaltradsatz und Hauptradsatz direkt verbunden sind, und dass das sechste und siebte Schaltelement ständig mit dem Hauptradsatz direkt verbunden sind, ohne mit dem Vorschaltradsatz direkt verbunden zu sein.

In Verbindung mit diesem Vorschaltradsatz kann als Anbindung der Schaltelemente an den Hauptradsatz vorgesehen sein, dass die erste drehbare Welle des Hauptradsatzes ständig mit einer drehbaren Welle des Vorschaltradsatzes verbunden ist, ohne mit einem der sieben Schaltelemente direkt verbunden zu sein, dass die zweite drehbare Welle des Hauptradsatzes ständig mit der drehbaren Antriebswelle verbunden ist, dass die dritte drehbare Welle des Hauptradsatzes ständig mit der drehbaren Abtriebswelle verbunden und über das siebte Schaltelement mit der fünften Welle des Hauptradsatzes verbindbar ist, und dass die vierte drehbare Welle über das sechste Schaltelement am Getriebegehäuse festsetzbar ist.

In einer konstruktiven Weiterbildung hierzu kann vorgesehen sein, dass die erste drehbare Welle des Hauptradsatzes ein erstes Element des vierten Planetenradsatzes ständig mit einem ersten Element des dritten Planetenradsatzes verbindet, dass die zweite drehbare Welle des Hauptradsatzes ständig mit einem zweiten Element der vierten Planetenradsatzes verbunden ist, dass die dritte drehbare Welle des Hauptradsatzes ständig mit einem zweiten Element des dritten Planetenradsatzes verbunden ist, dass die vierte drehbare Welle des Hauptradsatzes ständig mit einem dritten Element des dritten Planetenradsatzes verbunden ist, und dass die fünfte drehbare Welle des Hauptradsatzes ständig mit einem dritten Element des vierten Planetenradsatzes verbunden ist.

In einer zweiten bevorzugten Ausgestaltung der Erfindung ist vorgesehen, dass das erste, dritte und fünfte Schaltelement ständig mit dem Vorschaltradsatz direkt verbunden sind, ohne mit dem Hauptradsatz direkt verbunden zu sein, dass das zweite, vierte und sechste Schaltelement ständig mit Vorschaltradsatz und Hauptradsatz direkt verbunden sind, und dass das siebte Schaltelement ständig mit dem Hauptradsatz direkt verbunden ist, ohne mit dem Vorschaltradsatz direkt verbunden zu sein.

In Verbindung mit diesem Vorschaltradsatz kann als Anbindung der Schaltelemente an den Hauptradsatz vorgesehen sein, dass die erste drehbare Welle des Hauptradsatzes ständig mit einer drehbaren Welle des Vorschaltradsatzes verbunden ist, welche über das sechste Schaltelement mit der vierten drehbaren Welle des Hauptradsatzes verbindbar ist, dass die zweite drehbare Welle des Hauptradsatzes ständig mit der drehbaren Antriebswelle verbunden ist, und dass die dritte drehbare Welle des Hauptradsatzes ständig mit der drehbaren Abtriebswelle verbunden und über das siebte Schaltelement mit der fünften drehbaren Welle des Hauptradsatzes verbindbar ist.

In einer konstruktiven Weiterbildung hierzu kann vorgesehen sein, dass die erste drehbare Welle des Hauptradsatzes ständig mit einem ersten Element des vierten Planetenradsatzes verbunden ist, dass die zweite drehbare Welle des Hauptradsatzes ständig mit einem zweiten Element der vierten Planetenradsatzes verbunden ist, dass die dritte drehbare Welle des Hauptradsatzes ständig mit einem zweiten Element des dritten Planetenradsatzes verbunden ist, dass die vierte drehbare Welle des Hauptradsatzes ständig mit einem ersten Element des dritten Planetenradsatzes verbunden ist, dass die fünfte Welle des Hauptradsatzes ständig mit einem dritten Element des vierten Planetenradsatzes verbunden ist, und dass ein drittes Element des dritten Planetenradsatzes ständig am Getriebegehäuse festgesetzt ist.

In einer bevorzugten Ausgestaltung der Erfindung ist hinsichtlich der Anbindung der Schaltelemente an den Vorschaltradsatz vorgesehen, dass die erste drehbare Welle des Vorschaltradsatzes über das erste Schaltelement am Getriebegehäuse festsetzbar und über das zweite Schaltelement mit der drehbaren Antriebswelle verbindbar ist, dass die zweite drehbare Welle des Vorschaltradsatzes über das dritte Schaltelement am Getriebegehäuse festsetzbar und über das vierte Schaltelement mit der drehbaren Antriebswelle verbindbar ist, und dass die vierte drehbare Welle des Vorschaltradsatzes über das fünfte Schaltelement am Getriebegehäuse festsetzbar ist.

In einer hierzu alternativen Ausgestaltung ist hinsichtlich der Anbindung der Schaltelemente an den Vorschaltradsatz vorgesehen, dass die erste drehbare Welle des Vorschaltradsatzes über das erste Schaltelement am Getriebegehäuse festsetzbar ist, dass die zweite drehbare Welle des Vorschaltradsatzes über das dritte Schaltelement am Getriebegehäuse festsetzbar und über das vierte Schaltelement mit der drehbaren Antriebswelle verbindbar ist, dass die vierte drehbare Welle des Vorschaltradsatzes über das fünfte Schaltelement am Getriebegehäuse festsetzbar ist, und dass die fünfte drehbare Welle des Vorschaltradsatzes über das zweite Schaltelement mit der drehbaren Antriebswelle verbindbar ist.

In einer konstruktiven Weiterbildung des Vorschaltradsatzes kann vorgesehen sein, dass die erste drehbare Welle des Vorschaltradsatzes ständig mit einem ersten Element des ersten Planetenradsatzes verbunden ist, dass die zweite drehbare Welle des Vorschaltradsatzes ständig mit einem zweiten Element des ersten Planetenradsatzes verbunden ist, dass die dritte drehbare Welle des Vorschaltradsatzes ein drittes Element des ersten Planetenradsatzes ständig mit einem zweiten Element des zweiten Planetenradsatzes verbindet und über die drehbare Verbindungswelle ständig mit einer drehbaren Welle des Hauptradsatzes verbunden ist, dass die vierte drehbare Welle ständig mit einem dritten Element des zweiten Planetenradsatz verbunden ist, und dass die fünfte drehbare Welle des Vorschaltradsatzes ein viertes Element des ersten Planetenradsatzes ständig mit einem ersten Element des zweiten Planetenradsatzes verbindet. Dabei sind das erste und das fünfte Element des ersten Planetenradsatzes über Planetenräder des ersten Planetenradsatzes miteinander wirkverbunden.

Unter der Formulierung "Element eines Planetenradsatzes" ist ein Sonnenrad, ein Planetenradträger oder ein Hohlrad dieses Planetenradsatzes zu verstehen.

Im Zusammenhang mit der Ankoppelung eines Schaltelementes an einen Planetenradsatz ist unter der Formulierung "ständig verbunden" zu verstehen, dass das Eingangs- oder Ausgangselement des jeweiligen Schaltelementes über eine drehfeste oder drehelastischen Verbindung unmittelbar mit einem der Elemente des jeweiligen Planetenradsatzes verbunden ist, sodass es stets eine feste Drehzahlbeziehung zwischen diesem Planetenradsatzelement und dem Eingangs- bzw. Ausgangselement dieses Schaltelementes gibt.

Im Zusammenhang mit der Ankoppelung eines Schaltelementes an eine Welle ist unter der Formulierung "ständig verbunden" zu verstehen, dass das Eingangs- oder Ausgangselement des jeweiligen Schaltelementes über eine drehfeste oder drehelastischen Verbindung unmittelbar mit der jeweiligen Welle verbunden ist, sodass es stets eine feste Drehzahlbeziehung zwischen dieser Welle und dem Eingangs- bzw. Ausgangselement dieses Schaltelementes gibt.

Im Zusammenhang mit der Ankoppelung eines Planetenradsatzes an einen anderen Planetenradsatz ist unter der Formulierung "ständig verbunden" zu verstehen, dass eines der Elemente des jeweiligen Planetenradsatzes über eine drehfeste oder drehelastischen Verbindung unmittelbar mit einem der Elemente des jeweiligen anderen Planetenradsatzes verbunden ist, sodass es stets eine feste Drehzahlbeziehung zwischen diesen beiden Planetenradsatzelementen gibt.

Im Zusammenhang mit der Ankoppelung eines Planetenradsatzelementes oder eines Schaltelementes an das Gehäuse ist unter der Formulierung "ständig verbunden" zu verstehen, dass das jeweilige Planetenradsatzelement bzw. das Ausgangselement des jeweiligen Schaltelementes eine drehfeste oder drehelastischen Verbindung unmittelbar mit dem Gehäuse verbunden ist, sodass das jeweilige Planetenradsatzelement bzw. das Ausgangselement des jeweiligen Schaltelementes stets stillsteht.

Damit weist das erfindungsgemäße Automatgetriebe gegenüber dem gattungsgemäßen Stand der Technik eine eigenständige Kinematik auf, wobei unter Verwendung der sieben Schaltelemente stets elf Vorwärtsgänge und ein Rückwärtsgang schaltbar sind.

Vorzugsweise sind bei dem erfindungsgemäßen Automatgetriebe in jedem Gang drei der sieben Schaltelemente geschlossen. Dabei wird bei einem Wechsel von einem Gang in den nachfolgend höheren oder niedrigeren Gang jeweils nur eines der zuvor geschlossenen Schaltelemente geöffnet und ein zuvor offenes Schaltelement geschlossen, sodass beim sequenziellen Hochund Zurückschalten um jeweils einen Gang so genannte Gruppenschaltungen vermieden werden.

Das erfindungsgemäße Automatgetriebe zeichnet sich durch einen guten Wirkungsgrad aus, insbesondere dadurch, dass in zehn der elf Vorwärtsgängen nur einer der beiden Einzel-Planetenradsätze des Hauptradsatzes drehmomentführend ist, während der andere dieser beiden Einzel-Planetenradsätze des Hauptradsatzes lastlos ist und somit die Verzahnungsverluste minimiert sind.

Die hier vorgeschlagene Anbindung des jeweils als Kupplung ausgebildeten zweiten und vierten Schaltelementes ermöglicht eine für rotierende Kupplungen konstruktiv einfache und leckagesparende Versorgung mit Druck- und Schmiermittel für hydraulische Ansteuerung und Kühlung dieser beiden Kupplungen von der Antriebswelle her, sowie die fertigungstechnisch günstige Bildung einer leicht vormontierbaren Baugruppe. Die hier vorgeschlagene Anbindung des jeweils als Bremse ausgebildeten ersten, dritten und fünften Schaltelementes ermöglicht eine konstruktiv und auslegungstechnisch günstige und - sofern in axialer Richtung gesehen radial über dem Vorschaltradsatz oder radial über der Kupplungsbaugruppe angeordnet - auch baulängensparende Anordnung auf großem Durchmesser im Bereich der Getriebegehäuseaußenwand sowie eine konstruktive sehr einfache Zugänglichkeit für eine hydraulische oder auch mechanische Ansteuerung dieser drei Bremsen.

Ist das sechste Schaltelement wie vorgeschalten als Bremse ausgebildet, ergeben sich ebenfalls die bekannten Vorteile hinsichtlich konstruktivem Aufwand und Zugänglichkeit für deren hydraulische oder auch mechanische Ansteuerung. Ist das sechste Schaltelement wie alternativ vorgeschlagen als Kupplung ausgebildet, ergeben sich besondere Bauraumvorteile, sofern das sechste Schaltelement als Klauenkupplung ausgeführt ist.

Die vorgeschlagene Anbindung des als Kupplung ausgebildeten siebten Schaltelementes ermöglicht eine für eine rotierende Kupplung konstruktiv einfache und leckagesparende Versorgung mit Druck- und Schmiermittel für hydraulische Ansteuerung und Kühlung dieser Kupplung von der Abtriebswelle her.

Um mit sieben Schaltelementen elf Vorwärtsgänge und einen Rückwärtsgang darzustellen, kann folgende Schaltlogik bzw. Ganglogik vorgesehen sein: Im ersten Vorwärtsgang sind das zweite, fünfte und sechste Schaltelement drehmomentführend. Im zweiten Vorwärtsgang sind das vierte, fünfte und sechste Schaltelement drehmomentführend. Im dritten Vorwärtsgang sind das zweite, vierte und sechste Schaltelement drehmomentführend. Im vierten Vorwärtsgang sind das erste, vierte und sechste Schaltelement drehmomentführend. Im fünften Vorwärtsgang sind das erste, sechste und siebte Schaltelement drehmomentführend. Im sechsten Vorwärtsgang sind das erste, vierte und siebte Schaltelement drehmomentführend. Im siebten Vorwärtsgang sind das zweite, vierte und siebte Schaltelement drehmomentführend. Im achten Vorwärtsgang sind das vierte, fünfte und siebte Schaltelement drehmomentführend. Im neunten Vorwärtsgang sind das zweite, fünfte und siebte Schaltelement drehmomentführend. Im zehnten Vorwärtsgang sind das dritte, fünfte und siebte Schaltelement drehmomentführend. Im elften Vorwärtsgang sind das zweite, dritte und siebte Schaltelement drehmomentführend. Im Rückwärtsgang sind das zweite, vierte und sechste Schaltelement drehmomentführend. Auch diese Schaltlogik ermöglicht, dass nur im fünften Vorwärtsgang beide EinzelPlanetenradsätze des Hauptradsatzes gleichzeitig drehmomentführend sind, während in allen anderen Gängen stets nur einer der beiden Einzel-Planetenradsätze des Hauptradsatzes drehmomentführend sind, was zu einem spürbaren Wirkungsgradgewinn führt.

Sofern die erfindungsgemäße Kinematik der Koppelung der vier Planetenradsätzen untereinander, zu den verschiedenen Schaltelementen, zur Antriebswelle und zur Abtriebswelle beibehalten wird, ist der konstruktive Aufbau der vier Planetenradsätze in weiten Grenzen variierbar. So können einzelne oder mehrere der so genannten Minus-Planetenradsätze, deren jeweilige Planetenräder mit Sonnenrad und Hohlrad des jeweiligen Planetenradsatzes kämmen, auch durch jeweils einen so genannten Plus-Planetenradsatz ersetzt werden, was alternative räumliche Anordnung einzelner Schaltelemente innerhalb des Getriebegehäuses ermöglicht. Bekanntlich weist ein Plus-Planetenradsatz einen Planetenradträger mit daran drehbar gelagerten inneren und äußeren Planetenrädern auf, wobei jedes der inneren Planetenräder mit jeweils einem äußeren Planetenrad und mit dem Sonnenrad des Plus-Planetenradsatzes kämmt, während jedes der äußeren Planetenräder mit jeweils einem inneren Planetenrad und mit dem Hohlrad des Plus-Planetenradsatzes kämmt.

Zur Gewährleistung der gleichen Kinematik des beanspruchten Radsatzsystems ist ausreichend, dass das erste Element jedes Minus-Planetenradsatzes und das erste Element jedes Plus-Planetenradsatzes als Sonnenrad ausgebildet ist, dass das zweite Element jedes Minus-Planetenradsatzes als Planetenradträger ausgebildet ist, während das zweite Element jedes PlusPlanetenradsatzes als Hohlrad ausgebildet ist, und dass das dritte Element jedes Minus-Planetenradsatzes als Hohlrad ausgebildet ist, während das dritte Element jedes Plus-Planetenradsatzes als Planetenradträger ausgebildet ist.

Hinsichtlich der räumlichen Anordnung der vier Planetenradsätze im Gehäuse des Automatgetriebes wird in einer Ausgestaltung vorgeschlagen, alle vier Planetenradsätze koaxial zueinander nebeneinander in der definierten Reihenfolge "erster, zweiter, dritter, vierter Planetenradsatz" anzuordnen, wodurch es möglich ist, alle Kupplungen in einfacher Weise leckagearm mit dem zur hydraulischen Betätigung erforderlichen Druckmittel zu versorgen. Für eine Anwendung mit koaxial zueinander verlaufender Antriebs- und Abtriebswelle ist es in diesem Fall zweckmäßig, dass der erste Planetenradsatz der dem Antrieb des Automatgetriebes zugewandte Planetenradsatz der Planetenradsatzgruppe ist.

Selbstverständlich sind auch andere räumliche Anordnungen der vier Planetenradsätze und der sieben Schaltelemente im Gehäuse des Automatgetriebes möglich.

Alle vorgeschlagenen Ausführungen und Ausgestaltungen eines Automatgetriebes gemäß der Erfindung weisen insbesondere für Personenkraftwagen in der Praxis brauchbare Übersetzungen mit sehr großer Gesamtspreizung in hinsichtlich der Fahrbarkeit günstiger Gangabstufung auf, was sich auf den angestrebt niedrigen Kraftstoffverbrauch positiv auswirkt. Darüber hinaus zeichnet sich das erfindungsgemäße Automatgetriebe durch eine gemessen an der Gangzahl geringe Anzahl an Schaltelementen und einen vergleichsweise geringen Bauaufwand aus. Weiterhin zeichnet sich das erfindungsgemäße Automatgetriebe durch einen guten Wirkungsgrad aus, insbesondere dadurch, dass in zehn der elf Vorwärtsgängen nur einer der beiden Einzel-Planetenradsätze des Hauptradsatzes drehmomentführend ist, während der andere dieser beiden Einzel-Planetenradsätze lastlos ist und somit die Verzahnungsverluste in den außerdem einfach aufgebauten Einzel-Planetenradsätzen minimiert sind. Positiv auf den Wirkungsgrad wirken sich auch die geringen Schleppverluste an den Schaltelementen aus, da in jedem Gang jeweils drei der Schaltelemente im Eingriff sind.

In vorteilhafter Weise ist es mit dem erfindungsgemäßen Automatgetriebe möglich, ein Anfahren des Kraftfahrzeugs sowohl mit einem getriebeexternen Anfahrelement als auch mit einem getriebeinternen Reibschaltelement zu realisieren. Ein getriebeexternes Anfahrelement kann in an sich bekannter Weise beispielsweise als hydrodynamischer Drehmomentwandler (vorzugsweise mit Wandlerüberbrückungskupplung), als so genannte trockene Anfahrkupplung, als so genannte nasse Anfahrkupplung, als Magnetpulverkupplung oder als Fliehkraftkupplung ausgebildet sein. Alternativ zur Anordnung eines derartigen Anfahrelement in Kraftflussrichtung zwischen Antriebsmotor und Automatgetriebe kann das getriebeexterne Anfahrelement in Kraftflussrichtung auch hinter dem Automatgetriebe angeordnet sein, wobei in diesem Fall die Antriebswelle des Automatgetriebe ständig verdrehfest oder verdrehelastisch mit der Kurbelwelle des Antriebsmotors verbunden ist. Als getriebeinternes Anfahrelement eignet sich insbesondere das als Bremse ausgebildete sechste Schaltelement, das in den ersten fünf Vorwärtsgängen und im Rückwärtsgang drehmomentführend ist.

Außerdem ist das erfindungsgemäße Automatgetriebe derart konzipiert, dass eine Anpassbarkeit an unterschiedliche Triebstrangausgestaltungen sowohl in Kraftflussrichtung als auch in räumlicher Hinsicht ermöglicht wird. So können sich bei gleichem Getriebeschema, je nach Standgetriebeübersetzung der einzelnen Planetensätze, unterschiedliche Gangsprünge ergeben, so dass eine anwendungs- bzw. fahrzeugspezifische Variation ermöglicht wird. Weiterhin ist es ohne besondere konstruktive Maßnahmen möglich, Antrieb und Abtrieb des Automatgetriebes wahlweise koaxial oder achsparallel zueinander anzuordnen. Auf der Antriebsseite oder auf der Abtriebsseite des Automatgetriebes können ein Achsdifferential und/oder ein Verteilerdifferential angeordnet werden. Es ist zudem möglich, an jeder geeigneten Stelle des Automatgetriebes zusätzliche Freiläufe vorzusehen, beispielsweise zwischen einer Welle und dem Gehäuse oder um zwei Wellen gegebenenfalls zu verbinden. Auch kann auf jeder Welle, bevorzugt auf der Antriebswelle oder auf der Abtriebswelle, eine verschleißfreie Bremse, wie z.B. ein hydraulischer oder elektrischer Retarder oder dergleichen, angeordnet sein, welche insbesondere für den Einsatz in Nutzkraftfahrzeugen von besonderer Bedeutung ist. Auch kann zum Antrieb von zusätzlichen Aggregaten auf jeder Welle, bevorzugt auf der Antriebswelle oder der Abtriebswelle, ein Nebenabtrieb vorgesehen sein.

Ein weiterer Vorteil des erfindungsgemäßen Automatgetriebes besteht darin, dass an jeder Welle zusätzlich eine elektrische Maschine als Generator und/oder als zusätzliche Antriebsmaschine anbringbar ist. Generell ist es in konstruktiv sehr einfacher Weise möglich, eine solche elektrische Maschine direkt an die Antriebswelle oder auch direkt an die Abtriebswelle des Automatgetriebes anzukoppeln. Das vorgeschlagene Radsatzkonzept ermöglicht aber auch, eine solche elektrische Maschine in konstruktiv sehr einfacher Weise direkt an das erste Element des ersten Planetenradsatzes anzukoppeln. Auch die Ankopplung eine solche elektrische Maschine direkt an die Verbindungswelle, die den Vorschaltradsatz ständig mit dem Hauptradsatz verbindet, ist in konstruktiv sehr einfacher Weise möglich.

Die eingesetzten Schaltelemente können als lastschaltende Kupplungen oder Bremsen ausgebildet sein. Insbesondere können kraftschlüssige Kupplungen oder Bremsen -wie z.B. Lamellenkupplungen, Bandbremsen und/oder Konuskupplungen - verwendet werden. Als Schaltelemente können aber auch formschlüssige Bremsen und/oder Kupplungen -wie z.B. Synchronisierungen oder Klauenkupplungen - eingesetzt werden.

Die Erfindung wird im Folgenden anhand der Zeichnungen beispielhaft näher erläutert. Gleiche bzw. vergleichbare Bauteile sind dabei auch mit gleichen Bezugszeichen versehen. Es zeigen:
- Figur 1: eine schematische Darstellung eines ersten Ausführungsbeispiels eines erfindungsgemäßen Automatgetriebes;
- Figur 2: ein beispielhaftes Schaltschema für das Automatgetriebe gemäß Figur 1;
- Figur 3: eine schematische Darstellung eines ersten Anwendungsbeispiels eines Hybrid-Antriebstrangs mit dem Automatgetriebes gemäß Figur 1;
- Figur 4: eine schematische Darstellung eines zweiten Anwendungsbeispiels eines Hybrid-Antriebstrangs mit dem Automatgetriebes gemäß Figur 1;
- Figur 5: eine schematische Darstellung eines dritten Anwendungsbeispiels eines Hybrid-Antriebstrangs mit dem Automatgetriebes gemäß Figur 1;
- Figur 6: eine schematische Darstellung eines vierten Anwendungsbeispiels eines Hybrid-Antriebstrangs mit dem Automatgetriebes gemäß Figur 1;
- Figur 7: eine schematische Darstellung eines zweiten Ausführungsbeispiels eines erfindungsgemäßen Automatgetriebes; und
- Figur 8: eine schematische Darstellung eines dritten Ausführungsbeispiels eines erfindungsgemäßen Automatgetriebes.

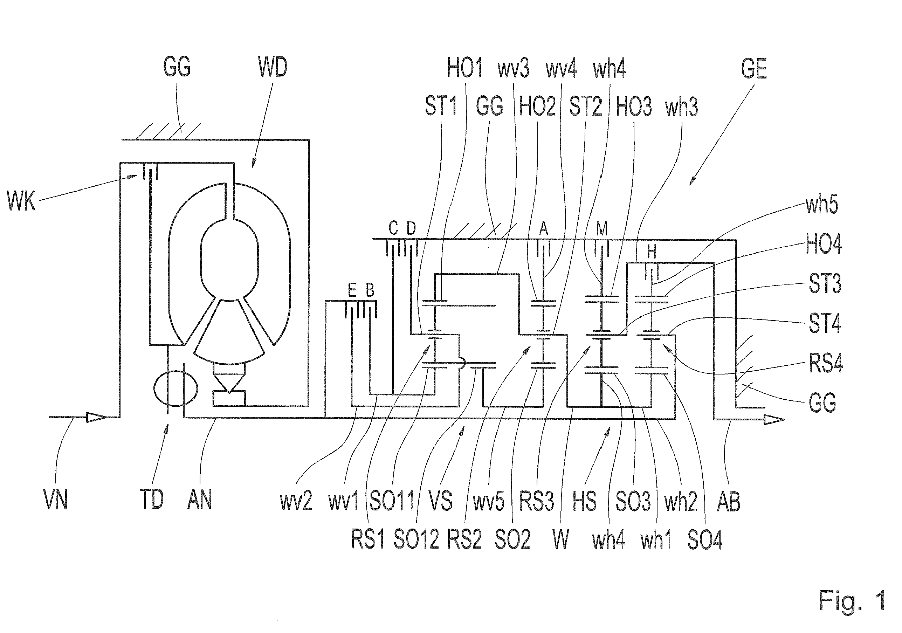

In Figur 1 ist das Radsatzschema eines ersten Ausführungsbeispiels eines erfindungsgemäßen Automatgetriebes dargestellt. Das als Automatgetriebe ausgebildete Getriebe ist mit GE bezeichnet und umfasst eine Antriebswelle AN, eine Abtriebswelle AB, vier Planetenradsätze RS1, RS2, RS3 und RS4 sowie sieben Schaltelemente C, B, D, E, A, M und H, die alle in einem Getriebegehäuse GG des Getriebes GE angeordnet sind. Die vier Planetenradsätze RS1 bis RS4 sind räumlich gesehen beispielhaft axial hintereinander angeordnet, hierbei beispielhaft in Reihenfolge "RS1 - RS2 - RS3 - RS4".

Antreibbar ist das Getriebe GE von einem in der Figur nicht näher dargestellten Verbrennungsmotor, dessen Kurbelwelle VN über ein beispielhaft als Drehmomentwandler WD ausgebildetes Anfahrelement mit der Antriebswelle AN des Getriebes GE wirkverbunden ist. Wie in modernen Drehmomentwandlern üblich, ist im Kraftfluss parallel zum hydraulischen Kreislauf des Drehmomentwandlers WD eine Wandlerüberbrückungskupplung WK vorgesehen. Zur Schwingungsentkoppelung umfasst der Drehmomentwandlers WD einen mechanischen Torsionsdämpfer TD, der im Kraftfluss zwischen der Kurbelwelle VN und der Antriebswelle AN angeordnet ist und hier beispielhaft direkt und ständig mit der Antriebswelle AN verbunden ist. Je nach Anwendungsfall wird der Fachmann den Aufbau des Drehmomentwandlers WD den gegebenen Anforderungen anpassen und gegebenenfalls auch ein anderes Anfahrelement vorsehen wie beispielsweise eine Anfahrkupplung.

Der erste und zweite Planetenradsatz RS1, RS2 bilden einen schaltbaren Vorschaltradsatz VS, der mit Antriebswelle AN verbindbar ist, während der dritte und vierte Planetenradsatz RS3, RS4 einen schaltbaren Hauptradsatz HS bilden, der ständig sowohl mit der Antriebswelle AN als auch mit der Abtriebswelle AB verbunden ist. Dabei sind Vorschaltradsatz VS und Hauptradsatz HS über genau eine Verbindungswelle W ständig miteinander verbunden.

Der den ersten und zweiten Planetenradsatz RS1, RS2 umfassende Vorschaltradsatz VS ist in Art eines so genannten schaltbaren Zwei-Steg-FünfWellen-Planetengetriebes mit fünf drehbaren Wellen wv1, wv2, wv3, wv4, wv5 ausgebildet. Konstruktiv sind beide Einzel-Planetenradsätze RS1, RS2 dieses Vorschaltradsatzes VS beispielhaft als so genannte Minus-Planetenradsätze ausgeführt. Als konstruktive Besonderheit umfasst der erste Planetenradsatz RS1 vier Elemente, während der zweite Planetenradsatz RS2 in "klassischer" Weise drei Elemente umfasst. Dabei bildet ein erstes Sonnenrad SO1A das erste Element des ersten Planetenradsatzes RS1, ein Planetenradträger ST1 das zweite Element des ersten Planetenradsatzes RS1, ein Hohlrad H01 das dritte Element des ersten Planetenradsatzes RS1 und ein zweites Sonnenrad S01 B das vierte Element des ersten Planetenradsatzes RS1, während ein Sonnenrad S02 das erste Element des zweiten Planetenradsatzes RS2 bildet, ein Planetenradträger ST2 das zweite Element des zweiten Planetenradsatzes RS2 und ein Hohrad H02 das dritte Element des zweiten Planetenradsatzes RS2. An dem Planetenradträger ST1 sind (in der Figur nicht näher bezeichnete) Planetenräder des ersten Planetenradsatzes RS1 drehbar gelagert, die jeweils mit dem ersten Sonnenrad SO1A, dem zweiten Sonnenrad S01 B und dem Hohlrad H01 in Zahneingriff sind. An dem Planetenradträger ST2 sind (in der Figur nicht näher bezeichnete) Planetenräder des zweiten Planetenradsatzes RS2 drehbar gelagert, die jeweils mit Sonnenrad S02 und Hohlrad H02 in Zahneingriff sind.

Das erste Sonnenrad S01 A des ersten Planetenradsatzes RS1 bildet die erste drehbare Welle wv1 des Vorschaltradsatzes VS. Der Planetenradträger ST1 des ersten Planetenradsatzes RS1 bildet die zweite drehbare Welle wv2 des Vorschaltradsatzes VS. Als dritte drehbare Welle wv3 des Vorschaltradsatzes VS sind das Hohlrad H01 des ersten Planetenradsatzes RS1 und der Planetenradträger ST2 des zweiten Planetenradsatzes RS2 in Art einer ersten Koppelwelle ständig miteinander verbunden. Das Hohlrad H02 des zweiten Planetenradsatzes RS2 bildet die vierte drehbare Welle wv4 des Vorschaltradsatzes VS. Als fünfte drehbare Welle wv5 des Vorschaltradsatzes VS sind das zweite Sonnenrad S01 B des ersten Planetenradsatzes RS1 und das Sonnenrad S02 des zweiten Planetenradsatzes RS2 in Art einer zweiten Koppelwelle ständig miteinander verbunden. Die dritte drehbare Welle wv3 des Vorschaltradsatzes VS ist über die Verbindungswelle W ständig mit der ersten Welle wh1 des Hauptradsatzes HS verbunden.

Schaltbar ist dieser Vorschaltradsatz VS über die fünf Schaltelemente C, B, D, E und A, die in dem dargestellten Ausführungsbeispiel alle beispielhaft als Reibschaltelemente mit Lamellen als Reibelemente ausgebildet sind. Dabei ist das erste Schaltelement C als Bremse ausgebildet und im Kraftfluss zwischen der ersten Welle wv1 des Vorschaltradsatzes VS und dem Getriebegehäuse GG angeordnet, sodass diese Kupplung C ständig mit dem ersten Sonnenrad SO1A des ersten Planetenradsatzes RS1 verbunden und dieses Sonnenrad SO1A durch Schließen der Bremse C am Getriebegehäuse GG festsetzbar ist. Das zweite Schaltelement B ist als Kupplung ausgebildet und im Kraftfluss zwischen der ersten Welle wv1 des Vorschaltradsatzes VS und der Antriebswelle AN angeordnet, sodass diese Kupplung B sowohl mit der Antriebswelle AN als auch mit dem ersten Sonnenrad SO1A des ersten Planetenradsatzes RS1 ständig verbunden und dieses Sonnenrad SO1A durch Schließen der Kupplung B mit der Antriebswelle AN verbindbar ist. Das dritte Schaltelement D ist als Bremse ausgebildet und im Kraftfluss zwischen der zweiten Welle wv2 des Vorschaltradsatzes VS und dem Getriebegehäuse GG angeordnet, sodass diese Bremse D ständig mit dem Planetenradträger ST1 des ersten Planetenradsatzes RS1 verbunden und dieser Planetenradträger ST1 durch Schließen der Bremse D am Getriebegehäuse GG festsetzbar ist. Das vierte Schaltelement E ist als Kupplung ausgebildet und im Kraftfluss zwischen der zweiten Welle wv2 des Vorschaltradsatzes VS und der Antriebswelle AN angeordnet, sodass diese Kupplung E sowohl mit der Antriebswelle AN als auch mit dem Planetenradträger ST1 des ersten Planetenradsatzes RS1 ständig verbunden und dieser erste Planetenradträger ST1 durch Schließen der Kupplung E mit der Antriebswelle AN verbindbar ist. Das fünfte Schaltelement A ist als Bremse ausgebildet und im Kraftfluss zwischen der vierten Welle wv4 des Vorschaltradsatzes VS und dem Getriebegehäuse GG angeordnet, sodass diese Kupplung A mit dem Hohlrad H02 des zweiten Planetenradsatzes RS2 ständig verbunden und dieses Hohlrad H02 durch Schließen der Kupplung A am Getriebegehäuse GG festsetzbar ist.

Auch der den dritten und vierten Planetenradsatz RS3, RS4 umfassende Hauptradsatz HS ist in Art eines so genannten schaltbaren Zwei-Steg-Fünf-Wellen-Planetengetriebes ausgebildet, wobei dessen fünf drehbare Wellen mit wh1, wh2, wh3, wh4, wh5 bezeichnet sind. Konstruktiv sind beide Einzel-Planetenradsätze RS3, RS4 dieses Hauptradsatzes HS beispielhaft als so genannte Minus-Planetenradsätze ausgeführt. Als konstruktive Besonderheit weist der Hauptradsatz nur eine Koppelwelle auf: Die erste drehbare Welle wh1 des Hauptradsatzes HS verbindet das Sonnenrad S01 des dritten Planetenradsatzes RS3 ständig mit dem Sonnenrad S04 des vierten Planetenradsatzes RS4, ist selber mit keinem der Schaltelemente direkt verbunden, aber über die Verbindungswelle W ständig mit der dritten drehbaren Welle wv3 des Vorschaltradsatzes VS verbunden. Der Planetenradträger ST4 des vierten Planetenradsatzes RS4 bildet die zweite drehbare Welle wh2 des Hauptradsatzes HS und ist ständig mit der Antriebswelle AN verbunden, ist also auch ständig mit den beiden Kupplungen B und E direkt verbunden. Der Planetenradträger ST3 des dritten Planetenradsatzes RS3 bildet die dritte drehbare Welle wh3 des Hauptradsatzes HS und ist ständig mit der Abtriebswelle AB verbunden. Das Hohlrad H03 des dritten Planetenradsatzes RS3 bildet die vierte drehbare Welle wh4 des Hauptradsatzes HS, während das Hohlrad H04 des vierten Planetenradsatzes RS4 die fünfte drehbare Welle wh5 des Hauptradsatzes HS bildet.

Schaltbar ist dieser Hauptradsatz HS über die zwei Schaltelemente M und H, die in dem dargestellten Ausführungsbeispiel beide beispielhaft als Reibschaltelemente mit Lamellen als Reibelemente ausgebildet sind. Dabei ist das sechste Schaltelement M des Getriebes GE als Bremse ausgebildet und im Kraftfluss zwischen der vierten Welle wh4 des Hauptradsatzes HS und dem Getriebegehäuse GG angeordnet, sodass diese Bremse M ständig mit dem Hohlrad H03 des dritten Planetenradsatzes RS3 verbunden und dieses Hohlrad H03 durch Schließen der Bremse M am Getriebegehäuse GG festsetzbar ist. Das siebte Schaltelement H des Getriebes GE ist als Kupplung ausgebildet und im Kraftfluss zwischen der dritten und fünften Welle wh3, wh5 des Hauptradsatzes HS angeordnet, sodass diese Kupplung H sowohl mit dem Planetenradträger ST3 des dritten Planetenradsatzes RS3 als auch mit dem Hohlrad H04 des vierten Planetenradsatzes RS4 ständig direkt verbunden und dieses Hohlrad H04 durch Schließen der Kupplung H mit diesem Planetenradträger ST3 (und somit auch mit der Abtriebswelle AB) verbindbar ist.

Hinsichtlich der räumlichen Anordnung der Schaltelemente ist in Figur 1 beispielhaft vorgesehen, dass die Kupplungen E und B eine in fertigungstechnisch günstiger Weise leicht vormontierbare Baugruppe bilden, die am Getriebeeingang angeordnet ist, also auf derjenigen Seite des Vorschaltradsatzes VS, die dem Hauptradsatz HS abgewandt ist. Dabei ist für diese beiden Kupplungen E, B ein gemeinsamer Außenlamellenträger vorgesehen, der ständig mit der Antriebswelle AN verbunden ist und neben den Lamellenpaketen der beiden Kupplungen E, B auch die zum Betätigen dieser zwei Lamellenpakete notwendigen Servoeinrichtungen aufnimmt. Um diese zwei Lamellenpakete auf möglichst großem Durchmesser anordnen zu können, sind sie axial nebeneinander angeordnet, wobei das Lamellenpaket der Kupplung B dem Vorschaltradsatz VS zugewandt ist. Neben den fertigungstechnischen Vorteilen bietet die hier vorgeschlagene Anordnung auch den funktionalen Vorteil einer für rotierende Kupplungen konstruktiv einfache und leckagesparende Versorgung mit Druck- und Schmiermittel für hydraulische Ansteuerung und Kühlung beider Kupplungen E, B von der Antriebswelle AN her. Bei Bedarf, insbesondere um Getriebebaulänge zu sparen, können die beiden Kupplungen E und B räumlich gesehen auch übereinander angeordnet sein, wobei in diesem Fall das Lamellenpaket der Kupplung B zweckmäßigerweise radial über dem Lamellenpaket der Kupplung E angeordnet ist.

Die beiden Bremsen C und D sind beispielhaft auf großem Durchmesser axial nebeneinander im Bereich der Außenwand des Getriebegehäuses GG nahe dem Vorschaltradsatz VS angeordnet, beispielhaft nahe dem ersten Planetenradsatz RS1, wobei die Bremse D näher am ersten Planetenradsatz RS1 angeordnet ist als die Bremse C. In bekannter Weise können die Außenlamellenträger der beiden Bremsen C, D dabei im Getriebegehäuse GG integriert sein. Vorteilhaft ist auch die konstruktive sehr einfache Zugänglichkeit für die hydraulische (oder alternativ mechanische oder alternativ elektrische) Ansteuerung dieser beiden Bremsen C, D. In dem dargestellten Ausführungsbeispiel sind die beiden Lamellenpakete der Bremsen C, D räumlich gesehen in einem Bereich axial zwischen der Kupplungsbaugruppe E/B und dem Vorschaltradsatz VS angeordnet, was einen besonders großen Lamellendurchmesser für die beiden Kupplungen E, B ermöglicht. Zur Einsparung von Getriebebaulänge können die beiden Bremsen C, D beispielsweise aber auch in axialer Richtung gesehen in einem Bereich radial über der Kupplungsbaugruppe E/B angeordnet sein, oder auch in axialer Richtung gesehen zumindest teilweise radial über dem Vorschaltradsatz VS.

Die Bremse A ist getriebebaulängensparend auf großem Durchmesser im Bereich der Außenwand des Getriebegehäuses GG radial über dem zweiten Planetenradsatz RS2 angeordnet. In fertigungstechnisch und kostengünstiger Weise können der Innenlamellenträger der Bremse A und das Hohlrad H02 des zweiten Planetenradsatzes RS2 als gemeinsames Bauteil - beispielsweise einstückig - ausgeführt sein. In bekannter Weise kann der Außenlamellenträger der Bremse A im Getriebegehäuse GG integriert sein. Vorteilhaft ist auch die konstruktiv sehr einfache Zugänglichkeit für die hydraulische (oder alternativ mechanische oder alternativ elektrische) Ansteuerung dieser Bremse A.

Die Bremse M ist getriebebaulängensparend auf großem Durchmesser im Bereich der Außenwand des Getriebegehäuses GG radial über dem dritten Planetenradsatz RS3 angeordnet. In fertigungstechnisch und kostengünstiger Weise können der Innenlamellenträger der Bremse M und das Hohlrad H03 des dritten Planetenradsatzes RS3 als gemeinsames Bauteil - beispielsweise einstückig - ausgeführt sein. In bekannter Weise kann der Außenlamellenträger der Bremse M im Getriebegehäuse GG integriert sein. Vorteilhaft ist auch die konstruktiv sehr einfache Zugänglichkeit für die hydraulische (oder alternativ mechanische oder alternativ elektrische) Ansteuerung dieser Bremse M.

Die Kupplung H - zumindest das Lamellenpaket der Kupplung H - ist räumlich gesehen überwiegend radial über dem vierten Planetenradsatz RS4 angeordnet, was in fertigungstechnisch und kostengünstiger Weise ermöglicht, den Innenlamellenträger der Kupplung H und das Hohlrad H04 des vierten Planetenradsatzes RS4 als gemeinsames Bauteil - beispielsweise einstückig-auszuführen. Der Außenlamellenträger der Kupplung H bildet einen Abschnitt der dritten Welle wh3 des Hauptradsatzes HS. Mit Druck- und Schmiermittel für hydraulische Ansteuerung und Kühlung kann die Kupplung H in konstruktiv einfacher und leckagesparender Weise über die mit dieser Welle wh3 ständig verbundene Abtriebswelle AB.

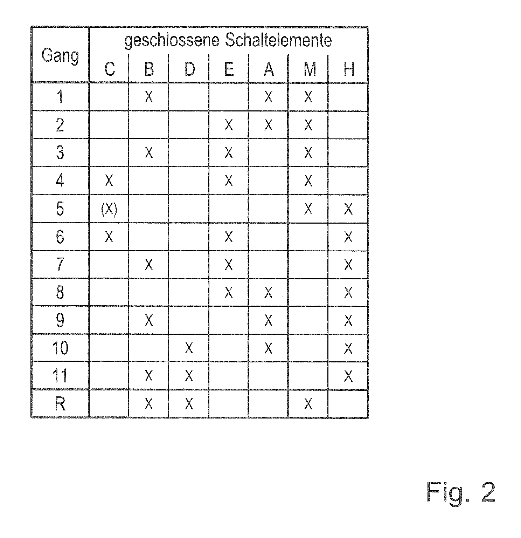

Im Prinzip ist die räumliche Anordnung der Schaltelemente C, B, D, E, A, M, H innerhalb des Getriebegehäuses GG in weiten Grenzen variabel und wird nur durch die Abmessungen und die äußere Formgebung des Getriebegehäuses GG begrenzt. Entsprechend ist die in Figur 1 dargestellte Bauteilanordnung ausdrücklich als nur eine von zahlreichen möglichen Bauteilanordnungs-Varianten zu verstehen. In gleicher Weise ist auch die in Figur 1 dargestellte Ausbildung der Schaltelemente als Lamellenkupplungen bzw. Lamellenbremsen ausdrücklich als nur beispielhaft zu verstehen. In alternativen Ausgestaltungen können beispielsweise auch formschlüssig schaltbare Klauen- oder Konuskupplung, reibschlüssig schaltbare Bandbremsen oder auch formschlüssig schaltbare Klauen- oder Konusbremsen Verwendung finden. Mit diesen insgesamt sieben Schaltelementen ist C, B, D, E, A, M, H ist ein selektives Schalten von elf Vorwärtsgängen und einem Rückwärtsgang realisierbar, was nachfolgend anhand von Figur 2 noch näher erläutert wird.

Figur 2 zeigt ein beispielhaftes Schaltschema für die in den Figuren 1 bis 4 dargestellten Hybridgetriebe. In jedem Gang sind drei Schaltelemente geschlossen, was in den Spalten der Figur 2, die den einzelnen Schaltelementen C, B, D, E, A, M, H zugeordnet sind, mit X gekennzeichnet ist. Um mit den sieben Schaltelementen C, B, D, E, A, M und H elf Vorwärtsgänge und einen Rückwärtsgang darzustellen, kann demnach folgende Schaltlogik bzw. Ganglogik vorgesehen sein: Im ersten Vorwärtsgang sind das zweite, fünfte und sechste Schaltelement B, A, M geschlossen bzw. zumindest drehmomentführend. Im zweiten Vorwärtsgang sind das vierte, fünfte und sechste Schaltelement E, A, M geschlossen bzw. zumindest drehmomentführend. Im dritten Vorwärtsgang sind das zweite, vierte und sechste Schaltelement B, E, M geschlossen bzw. zumindest drehmomentführend. Im vierten Vorwärtsgang sind das erste, vierte und sechste Schaltelement C, E, M geschlossen bzw. zumindest drehmomentführend. Im fünften Vorwärtsgang sind das erste, sechste und siebte Schaltelement C, M, H geschlossen bzw. zumindest drehmomentführend. Im sechsten Vorwärtsgang sind das erste, vierte und siebte Schaltelement C, E, H geschlossen bzw. zumindest drehmomentführend. Im siebten Vorwärtsgang sind das zweite, vierte und siebte Schaltelement B, E, H geschlossen bzw. zumindest drehmomentführend. Im achten Vorwärtsgang sind das vierte, fünfte und siebte Schaltelement E, A, H geschlossen bzw. zumindest drehmomentführend. Im neunten Vorwärtsgang sind das zweite, fünfte und siebte Schaltelement B, A, H geschlossen bzw. zumindest drehmomentführend. Im zehnten Vorwärtsgang sind das dritte, fünfte und siebte Schaltelement D, A, H geschlossen bzw. zumindest drehmomentführend. Im elften Vorwärtsgang sind das zweite, dritte und siebte Schaltelement B, D, H geschlossen bzw. zumindest drehmomentführend. Im Rückwärtsgang sind das zweite, vierte und sechste Schaltelement B, E, M geschlossen bzw. zumindest drehmomentführend. Diese Schaltlogik ermöglicht, dass nur im fünften Vorwärtsgang beide Einzel-Planetenradsätze RS3, RS4 des Hauptradsatzes HS gleichzeitig drehmomentführend sind, während in allen anderen Gängen stets nur einer der beiden Einzel-Planetenradsätze RS3, RS4 des Hauptradsatzes HS drehmomentführend sind, was den Wirkungsgrad positiv beeinflusst.

Gemäß dieser Schaltlogik werden bei sequentieller Schaltweise - also bei Hoch- oder Zurückschalten um jeweils einen Gang - so genannte Gruppenschaltungen vermieden, da zwei in der Schaltlogik benachbarte Gangstufen stets zwei Schaltelemente gemeinsam benutzen. Insgesamt können zumindest elf Vorwärtsgänge und zumindest ein Rückwärtsgang mit für die Praxis sinnvollen Übersetzungen geschaltet werden. Dass in jedem Gang drei Schaltelemente geschlossen sind, wirkt sich - infolge der Minimierung der an geöffneten Reibschaltelementen obligatorisch auftretenden Schleppverluste - auf den Wirkungsgrad des Getriebes positiv aus.

Selbstverständlich sind die in den Figur 1 zuvor dargestellten Getriebeschemata auch mit einer anderen räumlichen Anordnung der vier Planetenradsätze RS1, RS2, RS3, RS4 darstellbar, ohne die jeweilige Kinematik des Getriebes zu verändern. Solches kann insbesondere dann sinnvoll sein, wenn bei dem Getriebe Antriebswelle AN und Abtriebswelle AB nicht koaxial zueinander angeordnet sein sollen, wie dies beispielsweise bei einem so genannten Front-Quer-Einbau im Fahrzeug der Fall ist.

Auch hat die in Figur 1 zuvor vorgeschlagene räumliche Anordnung der sieben Schaltelemente innerhalb des Getriebegehäuses nur beispielhaften Charakter. Bei Bedarf und je nach den gegebenen baulichen Möglichkeiten wird der Fachmann auch sinnvolle Alternativen für die Anordnung der Schaltelemente realisieren.

Ausgehend von der Erkenntnis, dass es prinzipiell möglich ist, einen so genannten Minus-Planetenradsatz durch einen kinematisch gleichwertigen Plus-Planetenradsatz zu ersetzen, sofern es die Ankopplung von Sonnenrad, Planetenradträger und Hohlrad dieses Planetenradsatzes an die andern Planetenradsätze und die Schaltelemente und gegebenenfalls an das Gehäuse räumlich zulässt, wird der Fachmann bei Bedarf einzelne oder mehrere der in den Figuren dargestellten Minus-Planetenradsätze vier Planetenradsätze durch einen Plus-Planetenradsatz bzw. mehrere Plus-Planetenradsätze ersetzen. Bekanntlich ist bei einem Minus-Planetenradsatz jedes seiner Planetenräder sowohl mit dem Sonnenrad und dem Hohlrad in Zahneingriff, während bei einem Plus-Planetenradsatz jedes seiner inneren Planetenräder mit einem seiner äußeren Planetenräder und dem Sonnenrad in Zahneingriff ist und jedes seiner äußeren Planetenräder mit einem seiner inneren Planetenräder und dem Hohlrad in Zahneingriff ist.

Zur Beibehaltung des Kinematik des Radsatzsystems muss hierbei lediglich das erste Element jedes Minus-Planetenradsatzes als Sonnenrad, das zweite Element jedes Minus-Planetenradsatzes als Planetenradträger und das dritte Element jedes Minus-Planetenradsatzes als Hohlrad ausgebildet sein, während das erste Element jedes Plus-Planetenradsatzes als Sonnenrad, das zweite Element jedes Plus-Planetenradsatzes als Hohlrad und das dritte Element jedes Plus-Planetenradsatzes als Planetenradträger ausgebildet sein muss. Alle derartig generierten Varianten können mit der in Figur 2 dargestellten Schaltlogik elf Vorwärtsgänge und einen Rückwärtsgang schalten.

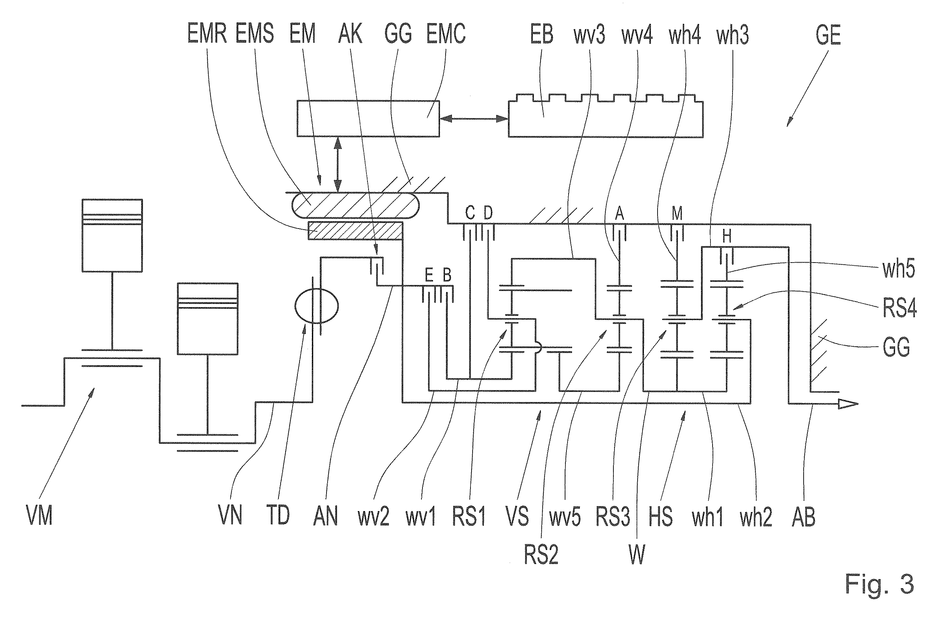

Das erfindungsgemäße Getriebekonzept eignet sich auch vorzüglich für den Einbau in einen Hybridantriebstrang, was nachfolgend anhand der Figuren 3, 4, 5 und 6 erläutert wird.

Figur 3 zeigt eine schematische Darstellung eines ersten Anwendungsbeispiels eines Hybrid-Antriebstrangs mit dem Automatgetriebes gemäß Figur 1. Wiederum umfasst das als Automatgetriebe ausgebildete Getriebe GE neben Antriebswelle AN und Abtriebswelle AB vier Planetenradsätze RS1, RS2, RS3, RS4 und sieben Schaltelemente C, B, D, E, A, M, H, alle im Getriebegehäuse GG angeordnet. Leicht ersichtlich ist, dass das in Figur 3 dargestellte Getriebe GE kinematisch identisch mit dem in Figur 1 dargestellten Getriebe GE ist, jedoch ergänzt um einen zusätzlichen elektrischen Antrieb.

Antreibbar ist das Getriebe GE zum einen von einem Verbrennungsmotor VM, dessen Kurbelwelle VN über eine Anfahrkupplung AK mit der Antriebswelle AN des Getriebes GE verbindbar ist. Zur Schwingungsentkoppelung ist im Kraftfluss zwischen der Kurbelwelle VN und der Anfahrkupplung AK ein mechanischer Torsionsdämpfer TD vorgesehen. Zum anderen ist das Getriebe GE von einer zusätzlichen Elektromaschine EM antreibbar, die ihrerseits von einem Steuergerät EMC angesteuert und geregelt wird und beim Antreiben des Getriebes GE Energie aus einem Akkumulator EB bezieht. Im so genannten Rekuperationsbetrieb kann das Getriebe GE Energie über die dann vom Getriebe GE angetriebene Elektromaschine EM in diesen Akkumulator EB einspeisten. Hierzu ist ein Rotor EMR der Elektromaschine EM ständig mit der Antriebswelle AN des Getriebes GE direkt verbunden. Ein Stator EMS der Elektromaschine EM ist getriebegehäusefest.

Der besondere Vorteil der in Figur 3 vorgeschlagenen Konfiguration des zusätzlichen elektrischen Antriebs liegt darin, dass die gegenüber dem gattungsgemäßen Automatgetriebe zusätzliche Elektromaschine EM in äußerst einfacher Weise mit einem bereits vorhandenen Rumpfgetriebe kombinierbar ist, dass also an dem vorhandenem Rumpfgetriebe für die Hybridisierung keine tiefgreifenden getriebeinternen Änderungen vorzunehmen sind. So kann die Elektromaschine je nach Dimensionierung ihrer Antriebsleistung problemlos in den Einbauraum eines Drehmomentwandlers untergebracht werden, der in den meisten bekannten Automatgetrieben als getriebeexternes Anfahrelement im Bereich einer so genannten Wandlerglocke, die einen dem Verbrennungsmotor zugewandten Teil des Getriebegehäuses bildet, angeordnet ist. Bei Bedarf - also bei höherer elektrischer Antriebsleistung - ist eine Verlängerung dieser Wandlerglocke konstruktiv einfach realisierbar. Dem Hersteller des Hydridgetriebes ermöglicht die hier vorgeschlagene Konfiguration also, dass er neben dem Hybridgetriebe auch das gattungsgemäße Automatgetriebe ohne Elektromaschine als in Art eines modularen Baukastens einzeln anbieten kann.

Räumlich gesehen ist die Elektromaschine EM in dem in Figur 3 dargestellten Ausführungsbeispiel auf der dem Verbrennungsmotor VM zugewandten Seite der Getriebes GE angeordnet, baulängensparend in einem Bereich radial über dem Torsionsdämpfer TD und insbesondere radial über dem als Anfahrkupplung AK ausgebildeten und mit der Antriebswelle AN verbundenen getriebeexternen Anfahrelement des Getriebes GE.

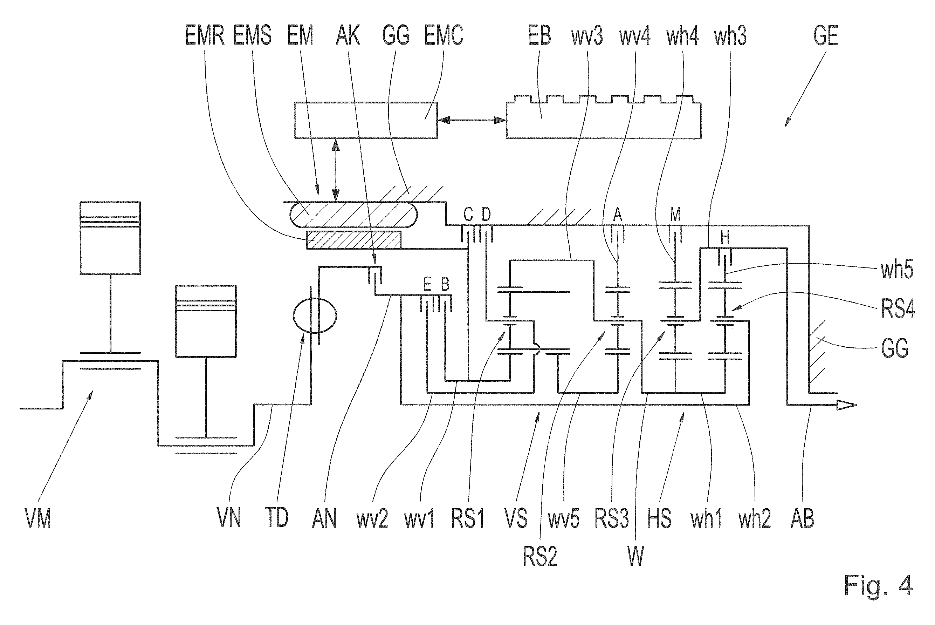

Figur 4 zeigt eine schematische Darstellung eines zweiten Anwendungsbeispiels eines Hybrid-Antriebstrangs mit dem Automatgetriebes gemäß Figur 1. Wiederum weist das als Automatgetriebe ausgebildete Getriebe GE neben Antriebswelle AN und Abtriebswelle AB vier Planetenradsätze RS1, RS2, RS3, RS4 und sieben Schaltelemente C, B, D, E, A, M, H auf, alle im Getriebegehäuse GG angeordnet. Leicht ersichtlich ist, dass das in Figur 4 dargestellte Getriebe GE kinematisch identisch mit dem in Figur 1 dargestellten Getriebe GE ist, jedoch ergänzt um einen zusätzlichen elektrischen Antrieb, der auf eine getriebeinterne Welle wirkt.

Entsprechend ist das Getriebe GE zum einen von einem Verbrennungsmotor VM antreibbar, dessen Kurbelwelle VN unter Zwischenschaltung eines zur Schwingungsentkoppelung vorgesehenen mechanischen Torsionsdämpfers TD über eine getriebeexterne Anfahrkupplung AK mit der Antriebswelle AN des Getriebes GE verbindbar ist. Zum anderen ist das Getriebe GE von einer zusätzlichen Elektromaschine EM antreibbar, die ihrerseits von einem Steuergerät EMC angesteuert und geregelt wird und beim Antreiben des Getriebes GE Energie aus einem Akkumulator EB bezieht. Im so genannten Rekuperationsbetrieb kann das Getriebe GE Energie über die dann vom Getriebe GE angetriebene Elektromaschine EM in diesen Akkumulator EB einspeisten. Hierzu ist ein Rotor EMR der Elektromaschine EM ständig mit der ersten Welle wv1 des Vorschaltradsatzes VS - also mit dem Sonnenrad S01 des ersten Planetenradsatzes RS1 - verbunden. Ein Stator EMS der Elektromaschine EM ist getriebegehäusefest.

Diese kinematische Ankopplung der gegenüber dem gattungsgemäßen Automatgetriebe zusätzlichen Elektromaschine EM ermöglicht in besonders vorteilhafter Weise ein so genanntes elektrodynamisches Gangschalten, bei dem die Elektromaschine EM die Lastschaltung übernimmt, also das im Schaltungsverlauf an der ersten Welle wv1 des Vorschaltradsatzes VS auftretende Stützmoment übernimmt.

Da über die Elektromaschine EM auch zwei rein elektrische Vorwärtsgänge möglich sind, beide mit zum Anfahren günstigen kurzen Getriebeübersetzung, kann in einer zu Figur 4 alternativen Ausgestaltung der kinematischen Ankopplung des Verbrennungsmotors VM an das Getriebe GE vorgesehen sein, dass die Antriebswelle AN des Getriebes GE ohne Zwischenschaltung eines separaten Anfahrelementes (wie beispielsweise einer Kupplung) mit der Kurbelwelle VN des Verbrennungsmotors VM (zweckmäßigerweise unter Zwischenschaltung eines drehschwingungsdämpfenden Torsionsdämpfers) wirkverbunden ist.

Konkret ist ein erster rein elektrischer Fahrgang möglich, wenn das fünfte Schaltelement A und das sechste Schaltelement M gleichzeitig geschlossen bzw. zumindest drehmomentführend sind, wodurch sowohl die vierte Welle wv4 des Vorschaltradsatzes VS (hier also das Sonnenrad S02) als auch die vierte Welle wh4 des Hauptradsatzes HS (hier also das Hohlrad H03) am Getriebegehäuse GG festgesetzt sind. Ein zweiter rein elektrischer Fahrgang ist möglich, wenn das dritte Schaltelement D und das siebte Schaltelement H gleichzeitig geschlossen bzw. zumindest drehmomentführend sind, wodurch die zweite Welle wv2 des Vorschaltradsatzes VS (hier also Planetenradträger ST1) am Getriebegehäuse GG festgesetzt ist und zeitgleich die fünfte Welle wh5 des Hauptradsatzes HS (hier also das Hohlrad H04) sowohl mit der dritten Welle wh3 des Hauptradsatzes HS (hier also mit dem Planetenradträger ST2) als auch mit der Abtriebswelle AB verbunden ist.

Sodann kann der Verbrennungsmotor durch die Elektromaschine EM gestartet werden, wenn die Anfahrkupplung AK, das vierte Schaltelement E und das fünfte Schaltelement A zeitgleich geschlossen bzw. drehmomentführend sind, also wenn die zweite Welle wv2 des Vorschaltradsatzes VS (hier also Planetenradträger ST1) mit der Antriebswelle AN verbunden ist und zweitgleich die vierte Welle wh4 des Vorschaltradsatzes VS (hier also das Sonnenrad S02) am Getriebegehäuse GG festgesetzt ist.

In dem in Figur 4 dargestellten Ausführungsbeispiel ist die Elektromaschine EM räumlich gesehen auf der dem Verbrennungsmotor VM zugewandten Seite der Getriebes GE angeordnet, baulängensparend in einem Bereich zumindest teilweise radial über dem Torsionsdämpfer TD und insbesondere zumindest teilweise radial über der mit der Antriebswelle AN verbundenen Kupplungsbaugruppe mit den Kupplungen H, E, A und B. Diese Anordnung in demjenigen Bereich, in dem bei einem herkömmlichen Wandler-Automatgetriebe der Drehmomentwandler angeordnet ist, ermöglicht die Bildung einer Baugruppe, umfassend die Elektromaschine EM, die Kupplungen H, E, A und B und den Torsionsdämpfer TD, als Substitution für den "klassischen" Drehmomentwandler, wobei der Rotor EMR der Elektromaschine EM eine eigene und gegenüber dem herkömmlichen Wandler-Automatgetriebe zusätzliche Wellenverbindung zu der hier als Sonnenrad S01 ausgebildeten ersten Welle wv1 des Vorschaltradsatzes VS benötigt. Diese Wellenverbindung kann beispielsweise über den Innenlamellenträger der Bremse C führen, beispielsweise derart, dass der Rotor EMR formschlüssig mit dem Innenlamellenträger der Bremse C verbunden ist und der Innenlamellenträger der Bremse C form- oder stoffschlüssig mit dem Sonnenrad S01 verbunden ist.

Bei einer zu Figur 4 alternativen Ausführung ohne getriebeexterne Anfahrkupplung AK ist die Elektromaschine EM räumlich gesehen zweckmäßigerweise und baulängensparend in einem Bereich radial über der Kupplungsbaugruppe mit den beiden getriebeinternen Kupplungen E und B des Getriebes GE angeordnet.

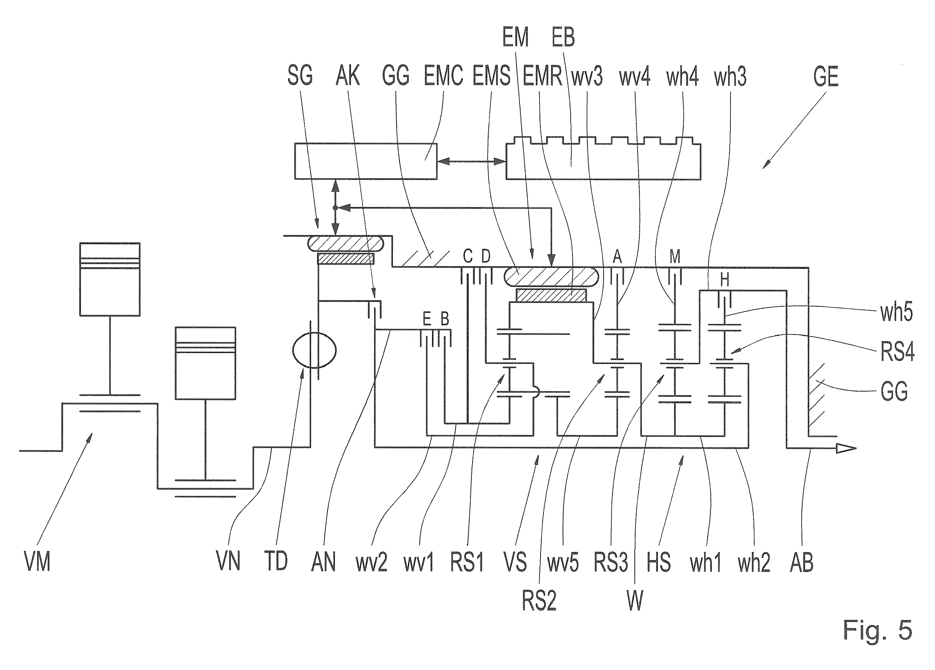

Figur 5 zeigt eine schematische Darstellung eines dritten Anwendungsbeispiels eines Hybrid-Antriebstrangs mit dem Automatgetriebes gemäß Figur 1. Wiederum weist das als Automatgetriebe ausgebildete Getriebe GE neben Antriebswelle AN und Abtriebswelle AB vier Planetenradsätze RS1, RS2, RS3, RS4 und sieben Schaltelemente C, B, D, E, A, M, H auf, alle im Getriebegehäuse GG angeordnet. Leicht ersichtlich ist, dass das in Figur 5 dargestellte Getriebe GE kinematisch identisch mit dem in Figur 1 dargestellten Getriebe GE ist, jedoch ergänzt um einen zusätzlichen elektrischen Antrieb, der auf eine getriebeinterne Welle wirkt.

Entsprechend ist das Getriebe GE zum einen von einem Verbrennungsmotor VM antreibbar, dessen Kurbelwelle VN unter Zwischenschaltung eines zur Schwingungsentkoppelung vorgesehenen mechanischen Torsionsdämpfers TD und einer separaten Anfahrkupplung AK mit der Antriebswelle AN des Getriebes GE verbunden ist. Zum anderen ist das Getriebe GE von einer zusätzlichen Elektromaschine EM antreibbar, die ihrerseits von einem Steuergerät EMC angesteuert und geregelt wird und beim Antreiben des Getriebes GE Energie aus einem Akkumulator EB bezieht. Im so genannten Rekuperationsbetrieb kann das Getriebe GE Energie über die dann vom Getriebe GE angetriebene Elektromaschine EM in diesen Akkumulator EB einspeisen. Hierzu ist ein Rotor EMR der Elektromaschine EM an die Verbindungswelle W angekoppelt, die ihrerseits den Vorschaltradsatz VS ständig mit dem Hauptradsatz HS verbindet. In dem hier dargestellten Ausführungsbeispiel ist der Rotor EMR ständig mit der dritten Welle wv3 des Vorschaltradsatzes VS verbunden. Ein Stator EMS der Elektromaschine EM ist getriebegehäusefest.

Auch diese kinematische Ankopplung der gegenüber dem gattungsgemäßen Automatgetriebe zusätzlichen Elektromaschine EM ermöglicht in besonders vorteilhafter Weise ein so genanntes elektrodynamisches Gangschalten, bei dem die Elektromaschine EM die Lastschaltung übernimmt, also das im Schaltungsverlauf an der dritten Welle wv3 des Vorschaltradsatzes VS auftretende Stützmoment übernimmt.

Da über die Elektromaschine EM auch zwei rein elektrische Vorwärtsgänge möglich sind, beide mit im Fahrbetrieb gut nutzbarer Getriebeübersetzung, kann in einer zu Figur 5 alternativen Ausgestaltung der kinematischen Ankopplung des Verbrennungsmotors VM an das Getriebe GE vorgesehen sein, dass die Antriebswelle AN des Getriebes GE ohne Zwischenschaltung eines separaten Anfahrelementes (wie beispielsweise einer Kupplung) mit der Kurbelwelle VN des Verbrennungsmotors VM (zweckmäßigerweise unter Zwischenschaltung eines drehschwingungsdämpfenden Torsionsdämpfers) wirkverbunden ist.

Konkret ist ein erster rein elektrischer Fahrgang möglich, wenn das sechste Schaltelement M geschlossen bzw. zumindest drehmomentführend ist, wodurch die vierte Welle wh4 des Hauptradsatzes HS (hier also das Hohlrad H03) am Getriebegehäuse GG festgesetzt ist. Ein zweiter rein elektrischer Fahrgang ist möglich, wenn das siebte Schaltelement H geschlossen bzw. zumindest drehmomentführend ist, wodurch die fünfte Welle wh5 des Hauptradsatzes HS (hier also das Hohlrad H04) sowohl mit der dritten Welle wh3 des Hauptradsatzes HS (hier also mit dem Planetenradträger ST2) als auch mit der Abtriebswelle AB verbunden ist.

Sodann kann der Verbrennungsmotor VM durch die Elektromaschine EM gestartet werden, wenn die Anfahrkupplung AK, das erste Schaltelement C und das vierte Schaltelement E zeitgleich geschlossen bzw. drehmomentführend sind, also wenn die erste Welle wh1 des Vorschaltradsatzes VS (hier also Sonnenrad SO1) am Getriebegehäuse GG festgesetzt ist und zeitgleich die zweite Welle wv2 des Vorschaltradsatzes VS (hier also Planetenradträger ST1) mit der Antriebswelle AN verbunden ist.

Als Alternative oder Ergänzung zur Möglichkeit, den Verbrennungsmotor VM durch die Elektromaschine EM zu starten, ist in Figur 5 ein zusätzlicher Starter-Generator SG vorgesehen, dessen Rotor über den Torsionsdämpfer TD mit der Kurbelwelle VN des Verbrennungsmotors VM wirkverbunden und dessen Stator getriebegehäusefest ist. Angesteuert wird dieser Elektrostarter/-Generator SG von dem Steuergerät EMC, vorrangig zum Starten des Verbrennungsmotors VM. Bei laufendem Verbrennungsmotor VM arbeitet der Elektro-starter/-Generator SG in Art einer klassischen Lichtmaschine, wobei die durch ihn erzeugte Energie, die nicht direkt vom Bordnetz des Kraftfahrzeugs verbraucht wird, in dem Akkumulator EB gespeichert wird.

In dem in Figur 5 dargestellten Ausführungsbeispiel ist die Elektromaschine EM räumlich gesehen baulängensparend in einem Bereich radial über dem Vorschaltradsatz VS angeordnet, wodurch der Rotor EMR der Elektromaschine EM über die dritte Welle wv3 des Vorschaltradsatzes VS mit der Verbindungswelle W verbunden ist.

Je nach den gegebenen Einbaubedingungen des Getriebes GE im Fahrzeug kann es auch zweckmäßig sein, die Elektromaschine EM alternativ zu Figur 5 in einem Bereich axial zwischen Vorschaltradsatz VS und Hauptradsatz HS anzuordnen, konkret in einem Bereich axial zwischen Bremse A und Hohlrad H03. In diesem Fall ist der Rotor der Elektromaschine dann direkt mit der Verbindungswelle W verbunden.

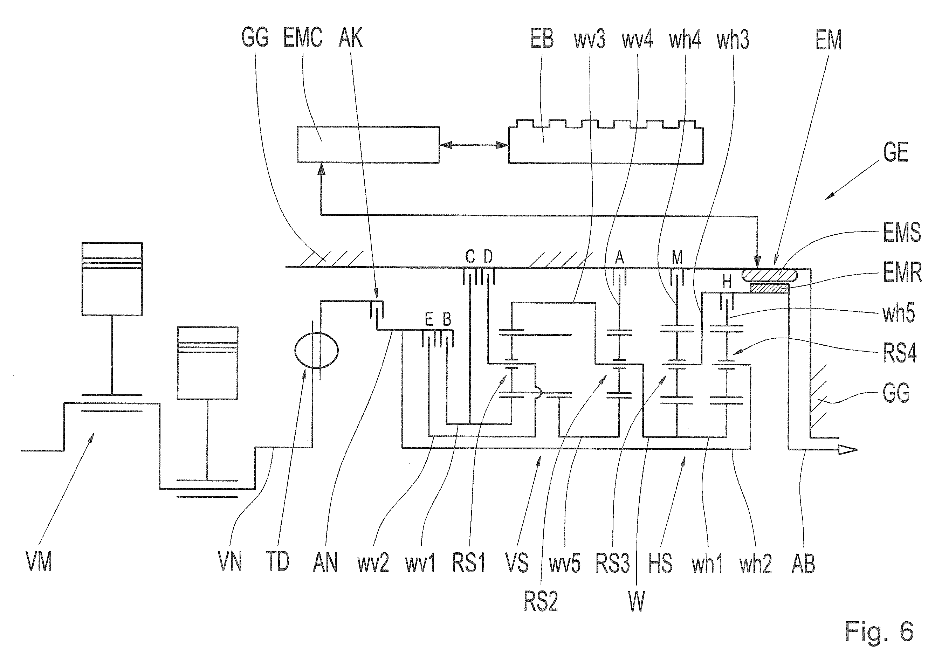

Figur 6 zeigt eine schematische Darstellung eines dritten Anwendungsbeispiels eines Hybrid-Antriebstrangs mit dem Automatgetriebes gemäß Figur 1. Wiederum weist das als Automatgetriebe ausgebildete Getriebe GE neben Antriebswelle AN und Abtriebswelle AB vier Planetenradsätze RS1, RS2, RS3,

RS4 und sieben Schaltelemente C, B, D, E, A, M, H auf, alle im Getriebegehäuse GG angeordnet. Leicht ersichtlich ist, dass das in Figur 6 dargestellte Getriebe GE kinematisch identisch mit dem in Figur 1 dargestellten Getriebe GE ist, jedoch ergänzt um einen zusätzlichen elektrischen Antrieb.

Antreibbar ist das Getriebe GE zum einen von einem Verbrennungsmotor VM, dessen Kurbelwelle VN über eine Anfahrkupplung AK mit der Antriebswelle AN des Getriebes GE verbindbar ist. Zur Schwingungsentkoppelung ist im Kraftfluss zwischen der Kurbelwelle VN und der Anfahrkupplung AK ein mechanischer Torsionsdämpfer TD vorgesehen. Zum anderen ist das Getriebe GE von einer zusätzlichen Elektromaschine EM antreibbar, die ihrerseits von einem Steuergerät EMC angesteuert und geregelt wird und beim Antreiben des Getriebes GE Energie aus einem Akkumulator EB bezieht. Im so genannten Rekuperationsbetrieb kann das Getriebe GE Energie über die dann vom Getriebe GE angetriebene Elektromaschine EM in diesen Akkumulator EB einspeisten. Hierzu ist ein Rotor EMR der Elektromaschine EM ständig mit der dritten Welle wh3 des Hauptradsatzes HS bzw. der Abtriebswelle AN des Getriebes GE direkt verbunden. Ein Stator EMS der Elektromaschine EM ist getriebegehäusefest.

Der besondere Vorteil der in Figur 6 vorgeschlagenen Konfiguration des zusätzlichen elektrischen Antriebs liegt wiederum darin, dass die gegenüber dem gattungsgemäßen Automatgetriebe zusätzliche Elektromaschine EM in äußerst einfacher Weise mit einem bereits vorhandenen Rumpfgetriebe kombinierbar ist, dass also an dem vorhandenem Rumpfgetriebe für die Hybridisierung keine tiefgreifenden getriebeinternen Änderungen vorzunehmen sind. So ist es in konstruktiv einfacher Weise möglich, die Elektromaschine EM wahlweise im Bereich des Hauptradsatzes HS innerhalb des Getriebegehäuses GG anzuordnen oder als so genanntes hang-on-Modul mit eigenem Gehäuse im Bereich der Abtriebswelle AN an das Getriebegehäuse GG anzuflanschen. Dem Hersteller des Hydridgetriebes ermöglicht die hier vorgeschlagene Konfiguration also, dass er neben dem Hybridgetriebe auch das gattungsgemäße Automatgetriebe ohne Elektromaschine als in Art eines modularen Baukastens einzeln anbieten kann.

In dem in Figur 6 dargestellten Ausführungsbeispiel ist die Elektromaschine EM räumlich gesehen in auf der dem Verbrennungsmotor VM abgewandten Seite der Getriebes GE angeordnet, hierbei beispielhaft in einem Bereich axial neben dem Hauptradsatz HS auf derjenigen Seite des vierten Planetenradsatzes RS4, die dem dritten Planetenradsatz RS3 gegenüber liegt. Diese räumliche Anordnung ermöglicht eine schlanke Gehäusebauform, was insbesondere für die Verwendung in einem so genannten Standardantrieb günstig ist. Steht ein entsprechender Einbauraum im Fahrzeug zur Verfügung, kann die Elektromaschine EM räumlich gesehen auch radial über dem Hauptradsatz HS angeordnet sein. Zumindest in dem letzten Fall ist der Rotor EMR der Elektromaschine über die dritte Welle wh3 des Hauptradsatzes HS mit der Abtriebswelle AB verbunden. Konstruktiv kann auch vorgesehen sein, dass die Elektromaschine EM über den Außenlamellenträger der Kupplung H an die dritte Welle wv3 des Hauptradsatzes HS bzw. an die Abtriebswelle AB angekoppelt ist, beispielsweise derart, dass der Rotor EMK form- oder stoffschlüssig mit dem Außenlamellenträger der Kupplung H verbunden ist, oder beispielsweise derart, dass Rotor EMK und Außenlamellenträger der Kupplung H einstückig ausgebildet sind.

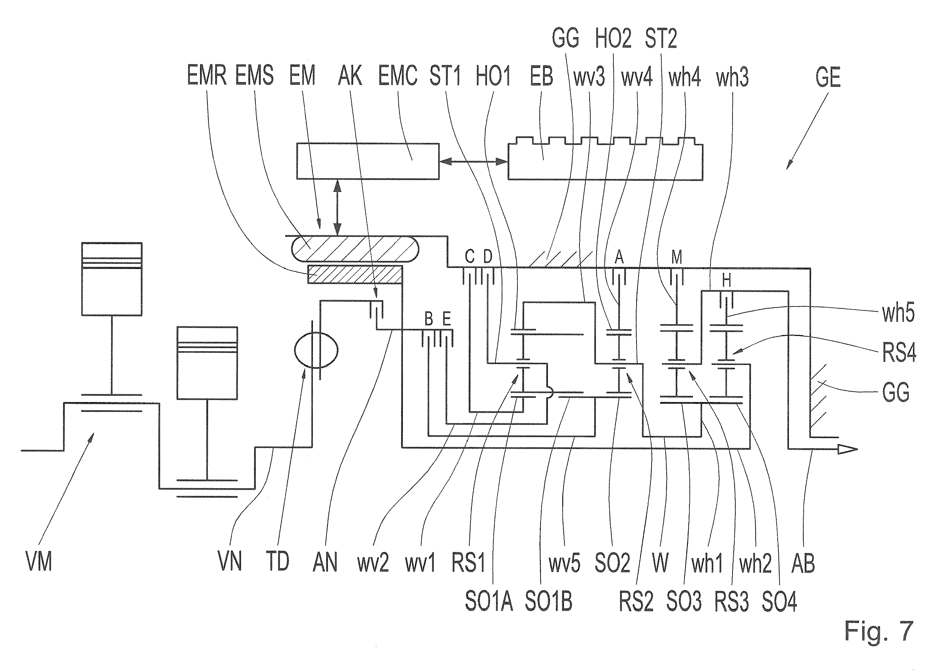

Figur 7 zeigt das Radsatzschema eines zweiten Ausführungsbeispiels eines erfindungsgemäßen Automatgetriebes, basierend auf dem in Figur 3 dargestellten Automatgetriebe. Leicht ersichtlich ist, dass sich das in Figur 7 dargestellte Getriebe GE von dem in Figur 3 dargestellten Getriebe im Wesentlichen durch die kinematische Anbindung des Vorschaltradsatzes VS an die ständig mit dem Vorschaltradsatz VS verbundenen Schaltelemente B und E unterscheidet. Somit kann die nachfolgende Beschreibung der Figur 7 weitgehend auf diese Besonderheiten beschränkt bleiben, um Wiederholungen zu vermeiden.

Der den ersten und zweiten Planetenradsatz RS1, RS2 umfassende Vorschaltradsatz VS ist unverändert in Art eines schaltbaren Zwei-Steg-Fünf-Wellen-Planetengetriebes mit fünf drehbaren Wellen wv1, wv2, wv3, wv4, wv5 ausgebildet, wobei die beiden Einzel-Planetenradsätze RS1, RS2 dieses Vorschaltradsatzes VS beispielhaft als Minus-Planetenradsätze ausgeführt sind. Wiederum umfasst der erste Planetenradsatz RS1 als konstruktive Besonderheit vier Elemente, während der zweite Planetenradsatz RS2 in "klassischer" Weise drei Elemente umfasst. Dabei bildet ein erstes Sonnenrad SO1A das erste Element des ersten Planetenradsatzes RS1, ein Planetenradträger ST1 das zweite Element des ersten Planetenradsatzes RS1, ein Hohlrad H01 das dritte Element des ersten Planetenradsatzes RS1 und ein zweites Sonnenrad S01 B das vierte Element des ersten Planetenradsatzes RS1, während ein Sonnenrad S02 das erste Element des zweiten Planetenradsatzes RS2 bildet, ein Planetenradträger ST2 das zweite Element des zweiten Planetenradsatzes RS2 und ein Hohlrad H02 das dritte Element des zweiten Planetenradsatzes RS2. An dem Planetenradträger ST1 sind (in der Figur nicht näher bezeichnete) Planetenräder des ersten Planetenradsatzes RS1 drehbar gelagert, die jeweils mit dem ersten Sonnenrad SO1A, dem zweiten Sonnenrad S01 B und dem Hohlrad H01 in Zahneingriff sind. An dem Planetenradträger ST2 sind (in der Figur nicht näher bezeichnete) Planetenräder des zweiten Planetenradsatzes RS2 drehbar gelagert, die jeweils mit Sonnenrad S02 und Hohlrad H02 in Zahneingriff sind.

Als hervorzuhebendes Konstruktionsdetail des Vorschaltradsatzes VS ist in Figur 7 vorgesehen, dass das zweite Sonnenrad S01 A des ersten Planetenradsatz RS1 und das Sonnenrad S02 des zweiten Planetenradsatzes RS2 beispielhaft als gemeinsames - also einstückig ausgebildetes - Sonnenrad ausgeführt sind.

Hinsichtlich seiner fünf Wellen wv1, wv2, wv3, wv4, wv5 unterscheidet sich der in Figur 7 dargestellte Vorschaltradsatz VS nicht von dem in Figur 1 / Figur 3 dargestellten Vorschaltradsatz. Demnach bildet das erste Sonnenrad SO1A des ersten Planetenradsatzes RS1 die erste drehbare Welle wv1 des Vorschaltradsatzes VS, der Planetenradträger ST1 des ersten Planetenradsatzes RS1 die zweite drehbare Welle wv2 des Vorschaltradsatzes VS, das Hohlrad H01 des ersten Planetenradsatzes RS1 und der ständig mit diesem Hohlrad H01 verbundene Planetenradträger ST2 des zweiten Planetenradsatzes RS2 die dritte drehbare Welle wv3 des Vorschaltradsatzes VS, das Hohlrad H02 des zweiten Planetenradsatzes RS2 die vierte drehbare Welle wv4 des Vorschaltradsatzes VS, und das durch das zweite Sonnenrad SO1A des ersten Planetenradsatz RS1 und das Sonnenrad S02 des zweiten Planetenradsatzes RS2 gebildete gemeinsame Sonnenrad die fünfte drehbare Welle wv5 des Vorschaltradsatzes VS. Auch ist die dritte Welle wv3 des Vorschaltradsatzes VS über die Verbindungswelle W ständig mit der ersten drehbaren Welle wh1 des Hauptradsatzes HS verbunden.

Schaltbar ist der in Figur 7 dargestellte Vorschaltradsatz VS wie in Figur 1 / Figur 3 über die fünf Schaltelemente C, B, D, E und A, die in dem dargestellten Ausführungsbeispiel alle beispielhaft als Reibschaltelemente mit Lamellen als Reibelemente ausgebildet sind. Wie in Figur 1 / Figur 3 ist das als Bremse ausgebildete erste Schaltelement C im Kraftfluss zwischen der ersten Welle wv1 des Vorschaltradsatzes VS und dem Getriebegehäuse GG angeordnet, sodass diese Kupplung C ständig mit dem ersten Sonnenrad SO1A des ersten Planetenradsatzes RS1 verbunden und dieses Sonnenrad SO1A durch Schließen der Bremse C am Getriebegehäuse GG festsetzbar ist. Im Unterschied zu Figur 1 / Figur 3 ist das als Kupplung ausgebildete zweite Schaltelement B im Kraftfluss zwischen der fünften Welle wv5 des Vorschaltradsatzes VS und der Antriebswelle AN angeordnet, sodass diese Kupplung B sowohl mit der Antriebswelle AN als auch mit dem zweiten Sonnenrad S01 B des ersten Planetenradsatzes RS1 und dem Sonnenrad S02 des zweiten Planetenradsatzes RS2 ständig verbunden und dieses gemeinsame Sonnenrad durch Schließen der Kupplung B mit der Antriebswelle AN verbindbar ist. Wie in Figur 1 / Figur 3 ist das als Bremse ausgebildete dritte Schaltelement D im Kraftfluss zwischen der zweiten Welle wv2 des Vorschaltradsatzes VS und dem Getriebegehäuse GG angeordnet, sodass diese Bremse D ständig mit dem Planetenradträger ST1 des ersten Planetenradsatzes RS1 verbunden und dieser Planetenradträger ST1 durch Schließen der Bremse D am Getriebegehäuse GG festsetzbar ist. Wie in Figur 1 / Figur 3 ist das als Kupplung ausgebildete vierte Schaltelement E im Kraftfluss zwischen der zweiten Welle wv2 des Vorschaltradsatzes VS und der Antriebswelle AN angeordnet, sodass diese Kupplung E sowohl mit der Antriebswelle AN als auch mit dem Planetenradträger ST1 des ersten Planetenradsatzes RS1 ständig verbunden und dieser Planetenradträger ST1 durch Schließen der Kupplung E mit der Antriebswelle AN verbindbar ist. Wie in Figur 1 / Figur 3 ist das als Bremse ausgebildete fünfte Schaltelement A im Kraftfluss zwischen der vierten Welle wv4 des Vorschaltradsatzes VS und dem Getriebegehäuse GG angeordnet, sodass diese Kupplung A mit dem Hohlrad H02 des zweiten Planetenradsatzes RS2 ständig verbunden und dieses Hohlrad H02 durch Schließen der Kupplung A am Getriebegehäuse GG festsetzbar ist.

Der wesentliche Unterschied zwischen dem in Figur 1 / Figur 3 vorgeschlagenen Vorschaltradsatz VS und dem in Figur 7 vorgeschlagenen Vorschaltradsatz VS besteht also darin, dass die Kupplung B nicht mehr an der ersten Welle wv1 des Vorschaltradsatzes VS angebunden ist, sondern nunmehr an der fünften Welle wv5 des Vorschaltradsatz VS, ohne dass die Struktur des Vorschaltradsatz VS verändert ist.

Als hervorzuhebendes Konstruktionsdetail des Hauptradsatzes HS ist in Figur 7 vorgesehen, dass das Sonnenrad S03 des dritten Planetenradsatzes RS3 und das Sonnenrad S04 des vierten Planetenradsatzes RS4 beispielhaft als gemeinsames - also einstückig ausgebildetes - Sonnenrad ausgeführt sind, welches die erste Welle wh1 des Hauptradsatzes HS bildet und über die Verbindungswelle W ständig mit der dritten Welle wv3 des Vorschaltradsatzes VS verbunden ist.

Das in Figur 7 dargestellte Automatgetriebe ermöglicht das Schalten von elf Vorwärtsgängen und einem Rückwärtsgang, unter Verwendung der gleichen Schaltlogik wie für das in Figur 1 dargestellte Automatgetriebe, also beispielsweise unter Verwendung der Schaltlogik gemäß Figur 2. Zudem lässt sich das in Figur 7 dargestellte Automatgetriebe problemlos mit den in den Figuren 4, 5 und 6 dargestellten elektrischen Zusatzantrieben kombinieren. Selbstverständlich lässt sich das in Figur 7 dargestellte Automatgetriebe aber auch problemlos mit dem in Figur 1 dargestellten "klassischen" Drehmomentwandler als Anfahrelement kombinieren.

Der besondere Vorteil der in Figur 7 gegenüber Figur 1 / Figur 3 geänderten kinematischen Anbindung der Kupplung B liegt im verbesserten Wirkungsgrad in den Vorwärtsgängen eins und neun, in denen Kupplung B und Bremse A gemeinsam geschlossen sind. Dann nämlich wird die Übersetzung, die von dem Vorschaltradsatz VS über die Verbindungswelle W auf den Hauptradsatz HS übertragen wird, direkt von dem zweiten Planetenradsatz RS2 erzeugt und die Antriebswellendrehzahl hierzu nicht mehr über die erste Welle des Vorschaltradsatzes und den Zahneingriff der langen Planetenräder des ersten Planetenradsatzes auf die fünfte Welle des Vorschaltradsatzes übertragen werden muss, sondern direkt auf die fünfte Welle wh5 des Vorschaltradsatzes VS übertragen werden kann.

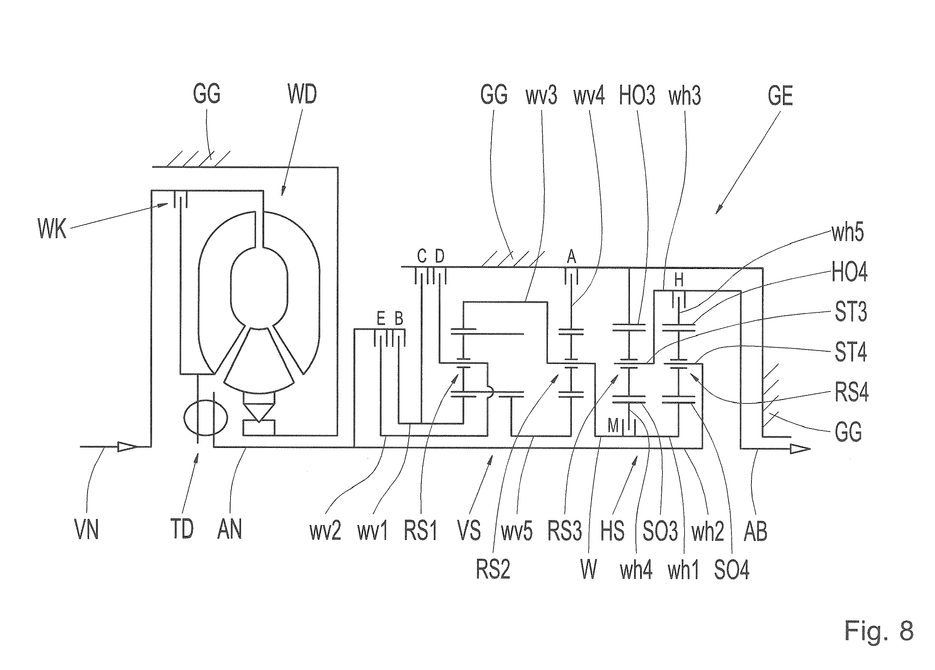

Figur 8 zeigt das Radsatzschema eines dritten Ausführungsbeispiels eines erfindungsgemäßen Automatgetriebes, basierend auf dem in Figur 1 dargestellten Automatgetriebe. Leicht ersichtlich ist, dass sich das in Figur 8 dargestellte Getriebe GE von dem in Figur 1 dargestellten Getriebe lediglich durch die kinematische Ausbildung des Hauptradsatzes HS unterscheidet. Somit kann die nachfolgende Beschreibung der Figur 8 auf die Besonderheiten des Hauptradsatzes HS beschränkt bleiben, um Wiederholungen zu vermeiden.

Der dritte und vierte Planetenradsatz RS3, RS4 bilden kinematisch einen Hauptradsatz HS mit fünf drehbaren Wellen wh1, wh2, wh3, wh4 und wh5. Konstruktiv sind beide Einzel-Planetenradsätze RS3, RS4 dieses Hauptradsatzes HS beispielhaft als so genannte Minus-Planetenradsätze ausgeführt, jeweils umfassend drei Elemente. Ein Sonnenrad S03 bildet das erste Element des dritten Planetenradsatzes RS3, ein Sonnenrad S04 das erste Element des vierten Planetenradsatzes RS4. Ein Planetenradträger ST3 bildet das zweite Element des dritten Planetenradsatzes RS3, ein Planetenradträger ST4 das zweite Element des vierten Planetenradsatzes RS4. Ein Hohlrad H03 bildet das dritte Element des dritten Planetenradsatzes RS3, ein Hohlrad H04 das dritte Element des vierten Planetenradsatzes RS4. Entsprechend der Ausbildung als Minus-Planetenradsatz sind am Planetenradträger ST3 (in der Figur nicht näher bezeichnete) Planetenräder des dritten Planetenradsatzes RS3 drehbar gelagert, wobei jedes dieser Planetenräder mit Sonnenrad S03 und Hohlrad H03 in Zahneingriff ist. In gleicher Weise sind am Planetenradträger ST4 (in der Figur ebenfalls nicht näher bezeichnete) Planetenräder des vierten Planetenradsatzes RS4 drehbar gelagert, wobei jedes dieser Planetenräder mit Sonnenrad S04 und Hohlrad H04 in Zahneingriff ist. Als technische Besonderheit weist der Hauptradsatz HS keine Koppelwelle auf.

Das Sonnenrad S04 des vierten Planetenradsatzes RS4 bildet die erste drehbare Welle wh1 des Hauptradsatzes HS. Der Planetenradträger ST4 des vierten Planetenradsatzes RS4 bildet die zweite drehbare Welle wh2 des Hauptradsatzes HS. Der Planetenradträger ST3 des dritten Planetenradsatzes RS3 bildet die dritte drehbare Welle wh3 des Hauptradsatzes HS, die zudem ständig mit der Abtriebswelle AB des Getriebes GE verbunden ist. Das Sonnenrad S03 des dritten Planetenradsatzes RS bildet die vierte drehbare Welle wh4 des Hauptradsatzes HS. Das Hohlrad H04 des vierten Planetenradsatzes RS4 bildet die fünfte drehbare Welle wh5 des Hauptradsatzes HS. Das Hohlrad H03 des dritten Planetenradsatzes RS3 ist am Getriebegehäuse ständig festgesetzt.

Schaltbar ist dieser Hauptradsatz HS über die beiden Schaltelemente M und H, die in Figur 8 beide beispielshaft als Reibschaltelemente mit Lamellen als Reibelemente ausgebildet sind. Das sechste Schaltelement M ist als Kupplung ausgebildet und im Kraftfluss zwischen der ersten und vierten Welle wh1, wh4 des Hauptradsatzes HS angeordnet, sodass diese Kupplung M ständig sowohl mit dem Sonnenrad S04 des vierten Planetenradsatzes RS4 als auch mit dem Sonnenrad S03 dritten Planetenradsatzes RS3 verbunden ist und diese beiden Sonnenräder S03, S04 durch Schließen der Kupplung M miteinander verbindbar sind. Da das Sonnenrad S04 des vierten Planetenradsatzes RS4 auch mit der Verbindungswelle W und somit auch mit dem Planetenradträger ST2 des zweiten Planetenradsatzes RS2 und dem Hohlrad H01 des ersten Planetenradsatzes RS1 verbunden ist, ist das Sonnenrad S03 des dritten Planetenradsatzes RS3 bei geschlossener Kupplung M über die Verbindungswelle W ebenfalls mit dem Planetenradträger ST2 und dem Hohlrad H01 verbunden. Das siebte Schaltelement H ist als Kupplung ausgebildet und im Kraftfluss zwischen der dritten und fünften Welle wh3, wh5 des Hauptradsatzes HS angeordnet, sodass diese Kupplung H ständig sowohl mit dem Planetenradträger ST3 des dritten Planetenradsatzes RS3 als auch mit dem Hohlrad H03 des vierten Planetenradsatzes RS4 verbunden und dieser Planetenradträger ST3 durch Schließen der Kupplung H mit dem Hohlrad H04 verbindbar ist. Da der Planetenradträger ST3 des dritten Planetenradsatzes RS3 auch ständig mit der Abtriebswelle AB verbunden ist, ist das Hohlrad H04 des vierten Planetenradsatzes HS4 bei geschlossener Kupplung H ebenfalls mit der Abtriebswelle AB verbunden.

Durch dieses Radsatzschema des Getriebes GE ergibt sich, dass das erste, dritte und fünfte Schaltelement C, D, A ständig mit dem Vorschaltradsatz VS direkt verbunden sind, ohne mit dem Hauptradsatz HS direkt verbunden zu sein, dass das zweite, vierte und sechste Schaltelement B, E, M ständig mit dem Vorschaltradsatz VS und dem Hauptradsatz HS direkt verbunden sind, und dass das siebte Schaltelement H ständig mit dem Hauptradsatz HS direkt verbunden ist, ohne mit dem Vorschaltradsatz VS direkt verbunden zu sein. Das sechste Schaltelement M ist also mit allen vier Planetenradsätzen RS1, RS2, RS3, RS4 ständig direkt verbunden

Die Kupplung M ist beispielhaft auf kleinem Durchmesser nahe dem Sonnenrad S03 des dritten Planetenradsatzes RS3 angeordnet, was insbesondere dann günstig ist, wenn die Kupplung M als Klauenkupplung ausgebildet ist. Im dargestellten Ausführungsbeispiel ist die Kupplung M jedoch als Lamellenkupplung ausbildet, mit einem Innenlamellenträger, der zusammen mit dem Sonnenrad S03 ein gemeinsames Bauteil bildet, sowie mit einem Außenlamellenträger, der einen Abschnitt der erste Welle wh1 des Hauptradsatzes HS bildet. Mit Druck- und Schmiermittel für hydraulische Ansteuerung und Kühlung kann die Kupplung M in vergleichsweise einfacher Weise von der Antriebswelle AN her kommend über diese die Antriebswelle AN radial umschließende Welle wh1. Vorteilhaft für die Dimensionierung der Kupplung M ist der geringe Stützfaktor an dem Sonnenrad S03. Zumindest das Lamellenpaket der Kupplung H ist - wie in Figur 1 - ist räumlich gesehen überwiegend radial über dem vierten Planetenradsatz RS4 angeordnet, mit den bereits in der Erläuterung zu Figur 1 beschriebenen Vorteilen.

Das in Figur 8 dargestellte Automatgetriebe ermöglicht das Schalten von elf Vorwärtsgängen und einem Rückwärtsgang, unter Verwendung der gleichen Schaltlogik wie für das in Figur 1 dargestellte Automatgetriebe, also beispielsweise unter Verwendung der Schaltlogik gemäß Figur 2. Zudem lässt sich das in Figur 8 dargestellte Automatgetriebe problemlos mit den in den Figuren 3, 4, 5 und 6 dargestellten elektrischen Zusatzantrieben kombinieren. Ebenso lässt sich der in Figur 8 dargestellte Hauptradsatz HS problemlos mit dem in Figur 7 dargestellten Vorschaltradsatz VS kombinieren.

### Bezugszeichen

- EB: Akkumulator
- EM: Elektromaschine
- EMC: Steuergerät der Elektromaschine
- EMR: Rotor der Elektromaschine
- EMS: Stator der Elektromaschine
- SG: Elektrostarter/-Generator
- VM: Verbrennungsmotor
- VN: Kurbelwelle des Verbrennungsmotors

- AK: Anfahrkupplung
- TD: Torsionsdämpfer
- WD: Drehmomentwandler
- WK: Wandlerüberbrückungskupplung

- GE: Getriebe
- GG: Getriebegehäuse
- AB: Abtriebswelle des Getriebes
- AN: Antriebswelle des Getriebes

- HS: Hauptradsatz des Getriebes
- wh1: erste Welle des Hauptradsatzes
- wh2: zweite Welle des Hauptradsatzes
- wh3: dritte Welle des Hauptradsatzes
- wh4: vierte Welle des Hauptradsatzes
- wh5: fünfte Welle des Hauptradsatzes
- VS: Vorschaltradsatz des Getriebes
- wv1: erste Welle des Vorschaltradsatzes
- wv2: zweite Welle des Vorschaltradsatzes
- wv3: dritte Welle des Vorschaltradsatzes
- wv4: vierte Welle des Vorschaltradsatzes
- wv5: fünfte Welle des Vorschaltradsatzes
- W: Verbindungswelle zwischen Vorschaltradsatz und Hauptradsatz

- A: fünftes Schaltelement, verbunden mit dem Vorschaltradsatz
- B: zweites Schaltelement, verbunden mit dem Vorschaltradsatz
- C: erstes Schaltelement, verbunden mit dem Vorschaltradsatz
- D: drittes Schaltelement, verbunden mit dem Vorschaltradsatz
- E: viertes Schaltelement, verbunden mit dem Vorschaltradsatz
- H: siebtes Schaltelement, verbunden mit dem Hauptradsatz
- M: sechstes Schaltelement, verbunden mit dem Hauptradsatz

- RS1: erster Planetenradsatz
- SO1A: erstes Sonnenrad des ersten Planetenradsatzes
- SO1B: zweites Sonnenrad des ersten Planetenradsatzes
- ST1: Planetenradträger des ersten Planetenradsatzes
- HO1: Hohlrad des ersten Planetenradsatzes

- RS2: zweiter Planetenradsatz
- SO2: Sonnenrad des zweiten Planetenradsatzes
- ST2: Planetenradträger des zweiten Planetenradsatzes
- HO2: Hohlrad des zweiten Planetenradsatzes

- RS3: dritter Planetenradsatz
- SO3: Sonnenrad des dritten Planetenradsatzes
- ST3: Planetenradträger des dritten Planetenradsatzes
- HO3: Hohlrad des dritten Planetenradsatzes
- RS4: vierter Planetenradsatz
- S04: Sonnenrad des vierten Planetenradsatzes
- ST4: Planetenradträger des vierten Planetenradsatzes
- H04: Hohlrad des vierten Planetenradsatzes

## Patentansprüche

1. Automatgetriebe, insbesondere für ein Kraftfahrzeug, umfassend ein Getriebegehäuse (GG), eine drehbare Antriebswelle (AN), eine drehbare Abtriebswelle (AB), vier Planetenradsätze (RS1, RS2, RS3, RS4) sowie sieben Schaltelemente (C, B, D, E, A, M, H) zum Schalten verschiedener Übersetzungsverhältnisse zwischen Antriebswelle (AN) und Abtriebswelle (AB),
wobei der erste und zweite Planetenradsatz (RS1, RS2) einen mit der Antriebswelle (AN) verbindbaren Vorschaltradsatz (VS) bilden,
wobei der dritte und vierte Planetenradsatz (RS3, RS4) einen ständig mit Antriebswelle (AN) und Abtriebswelle (AB) verbundenen Hauptradsatz (HS) bilden,
wobei der Vorschaltradsatz (VS) über genau eine drehbare Verbindungswelle (W) ständig mit dem Hauptradsatz (HS) verbunden ist,
wobei das erste, zweite, dritte, vierte und fünfte Schaltelement (C, B, D, E, A) ständig mit dem Vorschaltradsatz (VS) direkt verbunden sind,
wobei das sechste und siebte Schaltelement (M, H) ständig mit dem Hauptradsatz (HS) direkt verbunden sind,
**dadurch gekennzeichnet,**
**dass** Vorschaltradsatz (VS) und Hauptradsatz (HS) jeweils fünf drehbare Wellen (wv1, wv2, wv3, wv4, wv5; wh1, wh2, wh3, wh4, wh5) aufweisen.

2. Automatgetriebe nach Anspruch 1, **dadurch gekennzeichnet,**
**dass** das erste, dritte und fünfte Schaltelement (C, D, A) ständig mit dem Vorschaltradsatz (VS) direkt verbunden sind, ohne mit dem Hauptradsatz (HS) direkt verbunden zu sein,
**dass** das zweite und vierte Schaltelement (B, E) ständig mit Vorschaltradsatz (VS) und Hauptradsatz (HS) direkt verbunden sind,
und **dass** das sechste und siebte Schaltelement (M, H) ständig mit dem Hauptradsatz (HS) direkt verbunden sind, ohne mit dem Vorschaltradsatz (VS) direkt verbunden zu sein.

3. Automatgetriebe nach Anspruch 2, **dadurch gekennzeichnet, dass** die erste drehbare Welle (wh1) des Hauptradsatzes (HS) ständig mit einer drehbaren Welle (wv3) des Vorschaltradsatzes (VS) verbunden ist, ohne mit einem der Schaltelemente (C, B, D, E, A, M, H) direkt verbunden zu sein,
dass die zweite drehbare Welle (wh2) des Hauptradsatzes (HS) ständig mit der drehbaren Antriebswelle (AN) verbunden ist,
dass die dritte drehbare Welle (wh3) des Hauptradsatzes (HS) ständig mit der drehbaren Abtriebswelle (AB) verbunden und über das siebte Schaltelement (H) mit der fünften drehbaren Welle (wh5) des Hauptradsatzes (HS) verbindbar ist,
und dass die vierte drehbare Welle (wh4) des Hauptradsatzes (HS) über das sechste Schaltelement (M) am Getriebegehäuse (GG) festsetzbar ist.

4. Automatgetriebe nach Anspruch 3, **dadurch gekennzeichnet,**
**dass** die erste drehbare Welle (wh1) des Hauptradsatzes (HS) ein erstes Element (S04) des vierten Planetenradsatzes (RS4) ständig mit einem ersten Element (S03) des dritten Planetenradsatzes (RS3) verbindet,
**dass** die zweite drehbare Welle (wh2) des Hauptradsatzes (HS) ständig mit einem zweiten Element (ST4) der vierten Planetenradsatzes (RS4) verbunden ist,
**dass** die dritte drehbare Welle (wh3) des Hauptradsatzes (HS) ständig mit einem zweiten Element (ST3) des dritten Planetenradsatzes (RS3) verbunden ist,
**dass** die vierte drehbare Welle (wh4) des Hauptradsatzes (HS) ständig mit einem dritten Element (H03) des dritten Planetenradsatzes (RS3) verbunden ist,
und **dass** die fünfte drehbare Welle (wh5) des Hauptradsatzes (HS) ständig mit einem dritten Element (H04) des vierten Planetenradsatzes (RS4) verbunden ist.

5. Automatgetriebe nach Anspruch 1, **dadurch gekennzeichnet,**
**dass** das erste, dritte und fünfte Schaltelement (C, D, A) ständig mit dem Vorschaltradsatz (VS) direkt verbunden sind, ohne mit dem Hauptradsatz (HS) direkt verbunden zu sein,
**dass** das zweite, vierte und sechste Schaltelement (B, E, M) ständig mit Vorschaltradsatz (VS) und Hauptradsatz (HS) direkt verbunden sind,
und **dass** das siebte Schaltelement (H) ständig mit dem Hauptradsatz (HS) direkt verbunden ist, ohne mit dem Vorschaltradsatz (VS) direkt verbunden zu sein.

6. Automatgetriebe nach Anspruche 5, **dadurch gekennzeichnet,**
**dass** die erste drehbare Welle (wh1) des Hauptradsatzes (HS) ständig mit einer Welle (wv3) des Vorschaltradsatzes (VS) verbunden ist, welche über das sechste Schaltelement (M) mit der vierten drehbaren Welle (wh4) des Hauptradsatzes (HS) verbindbar ist,
**dass** die zweite drehbare Welle (wh2) des Hauptradsatzes (HS) ständig mit der drehbaren Antriebswelle (AN) verbunden ist,
und **dass** die dritte drehbare Welle (wh3) des Hauptradsatzes (HS) ständig mit der drehbaren Abtriebswelle (AB) verbunden und über das siebte Schaltelement (H) mit der fünften drehbaren Welle (wh5) des Hauptradsatzes verbindbar ist.

7. Automatgetriebe nach Anspruch 6, **dadurch gekennzeichnet,**
**dass** die erste drehbare Welle (wh1) des Hauptradsatzes (HS) ständig mit einem ersten Element (S04) des vierten Planetenradsatzes (RS4) verbunden ist,
**dass** die zweite drehbare Welle (wh2) des Hauptradsatzes (HS) ständig mit einem zweiten Element (ST4) der vierten Planetenradsatzes (RS4) verbunden ist,
**dass** die dritte drehbare Welle (wh3) des Hauptradsatzes (HS) ständig mit einem zweiten Element (ST3) des dritten Planetenradsatzes (RS3) verbunden ist,
**dass** die vierte drehbare Welle (wh4) des Hauptradsatzes (HS) ständig mit einem ersten Element (S03) des dritten Planetenradsatzes (RS3) verbunden ist,
**dass** die fünfte drehbare Welle (wh5) des Hauptradsatzes (HS) ständig mit einem dritten Element (H04) des vierten Planetenradsatzes (RS4) verbunden ist,
und **dass** ein drittes Element (H03) des dritten Planetenradsatzes (RS3) ständig am Getriebegehäuse (GG) festgesetzt ist.

8. Automatgetriebe nach einem der Ansprüche 1 bis 7, **dadurch gekennzeichnet,**
**dass** die erste drehbare Welle (wv1) des Vorschaltradsatzes (VS) über das erste Schaltelement (C) am Getriebegehäuse (GG) festsetzbar und über das zweite Schaltelement (B) mit der drehbaren Antriebswelle (AN) verbindbar ist, dass die zweite drehbare Welle (wv2) des Vorschaltradsatzes (VS) über das dritte Schaltelement (D) am Getriebegehäuse (GG) festsetzbar und über das vierte Schaltelement (E) mit der drehbaren Antriebswelle (AN) verbindbar ist, und dass die vierte drehbare Welle (wv4) des Vorschaltradsatzes (VS) über das fünfte Schaltelement (A) am Getriebegehäuse (GG) festsetzbar ist.

9. Automatgetriebe nach einem der Ansprüche 1 bis 7, **dadurch gekennzeichnet,**
**dass** die erste drehbare Welle (wv1) des Vorschaltradsatzes (VS) über das erste Schaltelement (C) am Getriebegehäuse (GG) festsetzbar ist,
**dass** die zweite drehbare Welle (wv2) des Vorschaltradsatzes (VS) über das dritte Schaltelement (D) am Getriebegehäuse (GG) festsetzbar und über das vierte Schaltelement (E) mit der drehbaren Antriebswelle (AN) verbindbar ist, dass die vierte drehbare Welle (wv4) des Vorschaltradsatzes (VS) über das fünfte Schaltelement (A) am Getriebegehäuse (GG) festsetzbar ist,
und **dass** die fünfte drehbare Welle (wv5) des Vorschaltradsatzes (VS) über das zweite Schaltelement (B) mit der drehbaren Antriebswelle (AN) verbindbar ist.

10. Automatgetriebe nach einem der Ansprüche 1 bis 9, **dadurch gekennzeichnet,**
**dass** die erste drehbare Welle (wv1) des Vorschaltradsatzes (VS) ständig mit einem ersten Element (SO1A) des ersten Planetenradsatzes (RS1) verbunden ist,
**dass** die zweite drehbare Welle (wv2) des Vorschaltradsatzes (VS) ständig mit einem zweiten Element (ST1) des ersten Planetenradsatzes (RS1) verbunden ist,
**dass** die dritte drehbare Welle (wv3) des Vorschaltradsatzes (VS) ein drittes Element (HO1) des ersten Planetenradsatzes (RS1) ständig mit einem zweiten Element (ST2) des zweiten Planetenradsatzes (RS2) verbindet und über die drehbare Verbindungswelle (W) ständig mit einer drehbaren Welle (wh1) des Hauptradsatzes (HS) verbunden ist.
**dass** die vierte drehbare Welle (wv4) ständig mit einem dritten Element (H03) des zweiten Planetenradsatz (RS2) verbunden ist,
und **dass** die fünfte drehbare Welle (wv5) des Vorschaltradsatzes (VS) ein viertes Element (S01 B) des ersten Planetenradsatzes (RS1) ständig mit einem ersten Element (S02) des zweiten Planetenradsatzes (RS2) verbindet,
wobei das erste und das fünfte Element (SO1A, S01 B) des ersten Planetenradsatzes (RS1) über Planetenräder des ersten Planetenradsatzes (RS1) miteinander wirkverbunden sind.

11. Automatgetriebe nach einem der Ansprüche 1 bis 10, **dadurch gekennzeichnet, dass** in jedem Gang drei der Schaltelemente geschlossen sind, wobei bei einem Wechsel von einem Gang in den nachfolgend höheren oder niedrigeren Gang jeweils nur eines der zuvor geschlossenen Schaltelemente geöffnet und nur ein zuvor offenes Schaltelement geschlossen wird.

12. Automatgetriebe nach Anspruch 11, **dadurch gekennzeichnet, dass** elf Vorwärtsgänge und ein Rückwärtsgang schaltbar sind, wobei
▪ im ersten Vorwärtsgang das zweite, fünfte und sechste Schaltelement (B, A, M) drehmomentführend sind,
▪ im zweiten Vorwärtsgang das vierte, fünfte und sechste Schaltelement (E, A, M) drehmomentführend sind,
▪ im dritten Vorwärtsgang das zweite, vierte und sechste Schaltelement (B, E, M) drehmomentführend sind,
▪ im vierten Vorwärtsgang das erste, vierte und sechste Schaltelement (C, E, M) drehmomentführend sind,
▪ im fünften Vorwärtsgang das erste, sechste und siebte Schaltelement (C, M, H) drehmomentführend sind,
▪ im sechsten Vorwärtsgang das erste, vierte und siebte Schaltelement (C, E, H) drehmomentführend sind,
▪ im siebten Vorwärtsgang das zweite, vierte und siebte Schaltelement (B, E, H) drehmomentführend sind,
▪ im achten Vorwärtsgang das vierte, fünfte und siebte Schaltelement (E, A, H) drehmomentführend sind,
▪ im neunten Vorwärtsgang das zweite, fünfte und siebte Schaltelement (B, A, H) drehmomentführend sind,
▪ im zehnten Vorwärtsgang das dritte, fünfte und siebte Schaltelement (D, A, H) drehmomentführend sind,
▪ im elften Vorwärtsgang das zweite, dritte und siebte Schaltelement (B, D, H) drehmomentführend sind, und
▪ im Rückwärtsgang das zweite, dritte und sechste Schaltelement (B, D, M) drehmomentführend sind.

13. Automatgetriebe nach einem der Ansprüche 1 bis 12, **dadurch gekennzeichnet, dass** alle vier Planetenradsätze (RS1, RS2, RS3, RS4) als Minus-Planetenradsätze ausgebildet sind.

14. Automatgetriebe nach einem der Ansprüche 1 bis 12, **dadurch gekennzeichnet, dass** ein Planetenradsatz der vier Planetenradsätze als Plus-Planetenradsatz ausgebildet ist, während die anderen drei Planetenradsätze jeweils als Minus-Planetenradsatz ausgebildet sind.

15. Automatgetriebe nach einem 8 der Ansprüche 1 bis 12, **dadurch gekennzeichnet, dass** zwei der Planetenradsätze jeweils als Plus-Planetenradsatz und die anderen zwei Planetenradsätze jeweils als Minus-Planetenradsatz ausgebildet sind.

16. Automatgetriebe nach einem der Ansprüche 1 bis 12, **dadurch gekennzeichnet, dass** einer der Planetenradsätze als Minus-Planetenradsatz ausgebildet ist, während die anderen drei Planetenradsätze jeweils als Plus-Planetenradsatz ausgebildet sind.

17. Automatgetriebe nach einem der Ansprüche 1 bis 12, **dadurch gekennzeichnet, dass** alle vier Planetenradsätze als Plus-Planetenradsätze ausgebildet sind.

18. Automatgetriebe nach einem der Ansprüche 13 bis 17, **dadurch gekennzeichnet,**
**dass** das erste Element jedes Minus-Planetenradsatzes und das erste Element jedes Plus-Planetenradsatzes als Sonnenrad ausgebildet ist,
**dass** das zweite Element jedes Minus-Planetenradsatzes als Planetenradträger ausgebildet ist, während das zweite Element jedes Plus-Planetenradsatzes als Hohlrad ausgebildet ist,
und **dass** das dritte Element jedes Minus-Planetenradsatzes als Hohlrad ausgebildet ist, während das dritte Element jedes Plus-Planetenradsatzes als Planetenradträger ausgebildet ist.

19. Automatgetriebe nach einem der Ansprüche 1 bis 18, **dadurch gekennzeichnet, dass** die Planetenradsätze koaxial zueinander und in axialer Richtung hintereinander in einer Reihenfolge "erster, zweiter, dritter, vierter Planetenradsatz" ("RS1, RS2, RS3, RS4") angeordnet sind.

20. Automatgetriebe nach einem der Ansprüche 1 bis 19, **dadurch gekennzeichnet, dass** die Antriebswelle (AN) ständig mit einem drehbaren Rotor (EMR) einer Elektromaschine (EM) verbunden ist.

21. Automatgetriebe nach einem der Ansprüche 1 bis 19, **dadurch gekennzeichnet, dass** das erste Element (SO1) des ersten Planetenradsatzes (RS1) ständig mit einem drehbaren Rotor (EMR) einer Elektromaschine (EM) verbunden ist.

22. Hybridgetriebe nach Anspruch 21, **dadurch gekennzeichnet, dass** die Elektromaschine (EM) räumlich gesehen zumindest teilweise in einem Bereich radial über dem zweiten und vierten Schaltelement (B, E) angeordnet ist.

23. Hybridgetriebe nach Anspruch 21 oder 22, **dadurch gekennzeichnet, dass** der drehbare Rotor (EMR) der Elektromaschine (EM) über einen Innenlamellenträger des ersten Schaltelementes (C) mit der ersten Element (SO1) des ersten Planetenradsatzes (RS1) verbunden ist.

24. Automatgetriebe nach einem der Ansprüche 1 bis 19, **dadurch gekennzeichnet, dass** die Verbindungswelle (W) ständig mit einem drehbaren Rotor (EMR) einer Elektromaschine (EM) verbunden ist.

25. Hybridgetriebe nach Anspruch 24, **dadurch gekennzeichnet, dass** die Elektromaschine (EM) räumlich gesehen in einem Bereich radial über dem ersten Planetenradsatz (RS1) angeordnet ist.

26. Hybridgetriebe nach Anspruch 24, **dadurch gekennzeichnet, dass** die Elektromaschine (EM) räumlich gesehen in einem Bereich axial zwischen dem zweiten und dritten Planetenradsatz (RS2, RS3) angeordnet ist.

27. Automatgetriebe nach einem der Ansprüche 1 bis 19, **dadurch gekennzeichnet, dass** die Abtriebswelle ständig mit einem drehbaren Rotor einer Elektromaschine verbunden ist.

## Geänderte Patentansprüche

### Geänderte Patentansprüche gemäss Regel 137(2) EPÜ.

1. Automatgetriebe, insbesondere für ein Kraftfahrzeug, umfassend ein Getriebegehäuse (GG), eine drehbare Antriebswelle (AN), eine drehbare Abtriebswelle (AB), vier Planetenradsätze (RS1, RS2, RS3, RS4) sowie sieben Schaltelemente (C, B, D, E, A, M, H) zum Schalten verschiedener Übersetzungsverhältnisse zwischen Antriebswelle (AN) und Abtriebswelle (AB),
wobei der erste und zweite Planetenradsatz (RS1, RS2) einen mit der Antriebswelle (AN) verbindbaren Vorschaltradsatz (VS) bilden,
wobei der dritte und vierte Planetenradsatz (RS3, RS4) einen ständig mit Antriebswelle (AN) und Abtriebswelle (AB) verbundenen Hauptradsatz (HS) bilden,
wobei der Vorschaltradsatz (VS) über genau eine drehbare Verbindungswelle (W) ständig mit dem Hauptradsatz (HS) verbunden ist,
wobei das erste, zweite, dritte, vierte und fünfte Schaltelement (C, B, D, E, A) ständig mit dem Vorschaltradsatz (VS) direkt verbunden sind,
wobei das sechste und siebte Schaltelement (M, H) ständig mit dem Hauptradsatz (HS) direkt verbunden sind,
**dadurch gekennzeichnet,**
**dass** Vorschaltradsatz (VS) und Hauptradsatz (HS) jeweils fünf drehbare Wellen (wv1, wv2, wv3, wv4, wv5; wh1, wh2, wh3, wh4, wh5) aufweisen, wobei die erste drehbare Welle (wv1) des Vorschaltradsatzes (VS) ständig mit einem ersten Element (SO1A) des ersten Planetenradsatzes (RS1) verbunden ist,
wobei die zweite drehbare Welle (wv2) des Vorschaltradsatzes (VS) ständig mit einem zweiten Element (ST1) des ersten Planetenradsatzes (RS1) verbunden ist,
wobei die dritte drehbare Welle (wv3) des Vorschaltradsatzes (VS) ein drittes Element (HO1) des ersten Planetenradsatzes (RS1) ständig mit einem zweiten Element (ST2) des zweiten Planetenradsatzes (RS2) verbindet und über die drehbare Verbindungswelle (W) ständig mit einer drehbaren Welle (wh1) des Hauptradsatzes (HS) verbunden ist.
wobei die vierte drehbare Welle (wv4) ständig mit einem dritten Element (H03) des zweiten Planetenradsatz (RS2) verbunden ist,
und wobei die fünfte drehbare Welle (wv5) des Vorschaltradsatzes (VS) ein viertes Element (SO1B) des ersten Planetenradsatzes (RS1) ständig mit einem ersten Element (S02) des zweiten Planetenradsatzes (RS2) verbindet,
wobei das erste und das vierte Element (SO1A, SO1B) des ersten Planetenradsatzes (RS1) über Planetenräder des ersten Planetenradsatzes (RS1) miteinander wirkverbunden sind.

2. Automatgetriebe nach Anspruch 1, **dadurch gekennzeichnet,**
**dass** das erste, dritte und fünfte Schaltelement (C, D, A) ständig mit dem Vorschaltradsatz (VS) direkt verbunden sind, ohne mit dem Hauptradsatz (HS) direkt verbunden zu sein,
**dass** das zweite und vierte Schaltelement (B, E) ständig mit Vorschaltradsatz (VS) und Hauptradsatz (HS) direkt verbunden sind,
und **dass** das sechste und siebte Schaltelement (M, H) ständig mit dem Hauptradsatz (HS) direkt verbunden sind, ohne mit dem Vorschaltradsatz (VS) direkt verbunden zu sein.

3. Automatgetriebe nach Anspruch 2, **dadurch gekennzeichnet, dass** die erste drehbare Welle (wh1) des Hauptradsatzes (HS) ständig mit einer drehbaren Welle (wv3) des Vorschaltradsatzes (VS) verbunden ist, ohne mit einem der Schaltelemente (C, B, D, E, A, M, H) direkt verbunden zu sein,
dass die zweite drehbare Welle (wh2) des Hauptradsatzes (HS) ständig mit der drehbaren Antriebswelle (AN) verbunden ist,
dass die dritte drehbare Welle (wh3) des Hauptradsatzes (HS) ständig mit der drehbaren Abtriebswelle (AB) verbunden und über das siebte Schaltelement (H) mit der fünften drehbaren Welle (wh5) des Hauptradsatzes (HS) verbindbar ist,
und dass die vierte drehbare Welle (wh4) des Hauptradsatzes (HS) über das sechste Schaltelement (M) am Getriebegehäuse (GG) festsetzbar ist.

4. Automatgetriebe nach Anspruch 3, **dadurch gekennzeichnet,**
**dass** die erste drehbare Welle (wh1) des Hauptradsatzes (HS) ein erstes Element (S04) des vierten Planetenradsatzes (RS4) ständig mit einem ersten Element (S03) des dritten Planetenradsatzes (RS3) verbindet,
**dass** die zweite drehbare Welle (wh2) des Hauptradsatzes (HS) ständig mit einem zweiten Element (ST4) des vierten Planetenradsatzes (RS4) verbunden ist,
**dass** die dritte drehbare Welle (wh3) des Hauptradsatzes (HS) ständig mit einem zweiten Element (ST3) des dritten Planetenradsatzes (RS3) verbunden ist,
**dass** die vierte drehbare Welle (wh4) des Hauptradsatzes (HS) ständig mit einem dritten Element (H03) des dritten Planetenradsatzes (RS3) verbunden ist,
und **dass** die fünfte drehbare Welle (wh5) des Hauptradsatzes (HS) ständig mit einem dritten Element (H04) des vierten Planetenradsatzes (RS4) verbunden ist.

5. Automatgetriebe nach Anspruch 1, **dadurch gekennzeichnet,**
**dass** das erste, dritte und fünfte Schaltelement (C, D, A) ständig mit dem Vorschaltradsatz (VS) direkt verbunden sind, ohne mit dem Hauptradsatz (HS) direkt verbunden zu sein,
**dass** das zweite, vierte und sechste Schaltelement (B, E, M) ständig mit Vorschaltradsatz (VS) und Hauptradsatz (HS) direkt verbunden sind,
und **dass** das siebte Schaltelement (H) ständig mit dem Hauptradsatz (HS) direkt verbunden ist, ohne mit dem Vorschaltradsatz (VS) direkt verbunden zu sein.

6. Automatgetriebe nach Anspruche 5, **dadurch gekennzeichnet,**
**dass** die erste drehbare Welle (wh1) des Hauptradsatzes (HS) ständig mit einer Welle (wv3) des Vorschaltradsatzes (VS) verbunden ist, welche über das sechste Schaltelement (M) mit der vierten drehbaren Welle (wh4) des Hauptradsatzes (HS) verbindbar ist,
**dass** die zweite drehbare Welle (wh2) des Hauptradsatzes (HS) ständig mit der drehbaren Antriebswelle (AN) verbunden ist,
und **dass** die dritte drehbare Welle (wh3) des Hauptradsatzes (HS) ständig mit der drehbaren Abtriebswelle (AB) verbunden und über das siebte Schaltelement (H) mit der fünften drehbaren Welle (wh5) des Hauptradsatzes verbindbar ist.

7. Automatgetriebe nach Anspruch 6, **dadurch gekennzeichnet,**
**dass** die erste drehbare Welle (wh1) des Hauptradsatzes (HS) ständig mit einem ersten Element (S04) des vierten Planetenradsatzes (RS4) verbunden ist,
**dass** die zweite drehbare Welle (wh2) des Hauptradsatzes (HS) ständig mit einem zweiten Element (ST4) des vierten Planetenradsatzes (RS4) verbunden ist,
**dass** die dritte drehbare Welle (wh3) des Hauptradsatzes (HS) ständig mit einem zweiten Element (ST3) des dritten Planetenradsatzes (RS3) verbunden ist,
**dass** die vierte drehbare Welle (wh4) des Hauptradsatzes (HS) ständig mit einem ersten Element (S03) des dritten Planetenradsatzes (RS3) verbunden ist,
**dass** die fünfte drehbare Welle (wh5) des Hauptradsatzes (HS) ständig mit einem dritten Element (H04) des vierten Planetenradsatzes (RS4) verbunden ist,
und **dass** ein drittes Element (H03) des dritten Planetenradsatzes (RS3) ständig am Getriebegehäuse (GG) festgesetzt ist.

8. Automatgetriebe nach einem der Ansprüche 1 bis 7, **dadurch gekennzeichnet,**
**dass** die erste drehbare Welle (wv1) des Vorschaltradsatzes (VS) über das erste Schaltelement (C) am Getriebegehäuse (GG) festsetzbar und über das zweite Schaltelement (B) mit der drehbaren Antriebswelle (AN) verbindbar ist,
**dass** die zweite drehbare Welle (wv2) des Vorschaltradsatzes (VS) über das dritte Schaltelement (D) am Getriebegehäuse (GG) festsetzbar und über das vierte Schaltelement (E) mit der drehbaren Antriebswelle (AN) verbindbar ist, und dass die vierte drehbare Welle (wv4) des Vorschaltradsatzes (VS) über das fünfte Schaltelement (A) am Getriebegehäuse (GG) festsetzbar ist.

9. Automatgetriebe nach einem der Ansprüche 1 bis 7, **dadurch gekennzeichnet,**
**dass** die erste drehbare Welle (wv1) des Vorschaltradsatzes (VS) über das erste Schaltelement (C) am Getriebegehäuse (GG) festsetzbar ist,
**dass** die zweite drehbare Welle (wv2) des Vorschaltradsatzes (VS) über das dritte Schaltelement (D) am Getriebegehäuse (GG) festsetzbar und über das vierte Schaltelement (E) mit der drehbaren Antriebswelle (AN) verbindbar ist, dass die vierte drehbare Welle (wv4) des Vorschaltradsatzes (VS) über das fünfte Schaltelement (A) am Getriebegehäuse (GG) festsetzbar ist,
und **dass** die fünfte drehbare Welle (wv5) des Vorschaltradsatzes (VS) über das zweite Schaltelement (B) mit der drehbaren Antriebswelle (AN) verbindbar ist.

10. Automatgetriebe nach einem der Ansprüche 1 bis 9, **dadurch gekennzeichnet, dass** in jedem Gang drei der Schaltelemente geschlossen sind, wobei bei einem Wechsel von einem Gang in den nachfolgend höheren oder niedrigeren Gang jeweils nur eines der zuvor geschlossenen Schaltelemente geöffnet und nur ein zuvor offenes Schaltelement geschlossen wird.

11. Automatgetriebe nach Anspruch 10, **dadurch gekennzeichnet, dass** elf Vorwärtsgänge und ein Rückwärtsgang schaltbar sind, wobei
▪ im ersten Vorwärtsgang das zweite, fünfte und sechste Schaltelement (B, A, M) drehmomentführend sind,
▪ im zweiten Vorwärtsgang das vierte, fünfte und sechste Schaltelement (E, A, M) drehmomentführend sind,
▪ im dritten Vorwärtsgang das zweite, vierte und sechste Schaltelement (B, E, M) drehmomentführend sind,
▪ im vierten Vorwärtsgang das erste, vierte und sechste Schaltelement (C, E, M) drehmomentführend sind,
▪ im fünften Vorwärtsgang das erste, sechste und siebte Schaltelement (C, M, H) drehmomentführend sind,
▪ im sechsten Vorwärtsgang das erste, vierte und siebte Schaltelement (C, E, H) drehmomentführend sind,
▪ im siebten Vorwärtsgang das zweite, vierte und siebte Schaltelement (B, E, H) drehmomentführend sind,
▪ im achten Vorwärtsgang das vierte, fünfte und siebte Schaltelement (E, A, H) drehmomentführend sind,
▪ im neunten Vorwärtsgang das zweite, fünfte und siebte Schaltelement (B, A, H) drehmomentführend sind,
▪ im zehnten Vorwärtsgang das dritte, fünfte und siebte Schaltelement (D, A, H) drehmomentführend sind,
▪ im elften Vorwärtsgang das zweite, dritte und siebte Schaltelement (B, D, H) drehmomentführend sind, und
▪ im Rückwärtsgang das zweite, dritte und sechste Schaltelement (B, D, M) drehmomentführend sind.

12. Automatgetriebe nach einem der Ansprüche 1 bis 11, **dadurch gekennzeichnet, dass** alle vier Planetenradsätze (RS1, RS2, RS3, RS4) als Minus-Planetenradsätze ausgebildet sind.

13. Automatgetriebe nach einem der Ansprüche 1 bis 11, **dadurch gekennzeichnet, dass** ein Planetenradsatz der vier Planetenradsätze als Plus-Planetenradsatz ausgebildet ist, während die anderen drei Planetenradsätze jeweils als Minus-Planetenradsatz ausgebildet sind.

14. Automatgetriebe nach einem 8 der Ansprüche 1 bis 11, **dadurch gekennzeichnet, dass** zwei der Planetenradsätze jeweils als Plus-Planetenradsatz und die anderen zwei Planetenradsätze jeweils als Minus-Planetenradsatz ausgebildet sind.

15. Automatgetriebe nach einem der Ansprüche 1 bis 11, **dadurch gekennzeichnet, dass** einer der Planetenradsätze als Minus-Planetenradsatz ausgebildet ist, während die anderen drei Planetenradsätze jeweils als Plus-Planetenradsatz ausgebildet sind.

16. Automatgetriebe nach einem der Ansprüche 1 bis 11, **dadurch gekennzeichnet, dass** alle vier Planetenradsätze als Plus-Planetenradsätze ausgebildet sind.

17. Automatgetriebe nach einem der Ansprüche 12 bis 16, **dadurch gekennzeichnet,**
**dass** das erste Element jedes Minus-Planetenradsatzes und das erste Element jedes Plus-Planetenradsatzes als Sonnenrad ausgebildet ist,
**dass** das zweite Element jedes Minus-Planetenradsatzes als Planetenradträger ausgebildet ist, während das zweite Element jedes Plus-Planetenradsatzes als Hohlrad ausgebildet ist,
und **dass** das dritte Element jedes Minus-Planetenradsatzes als Hohlrad ausgebildet ist, während das dritte Element jedes Plus-Planetenradsatzes als Planetenradträger ausgebildet ist.

18. Automatgetriebe nach einem der Ansprüche 1 bis 17, **dadurch gekennzeichnet, dass** die Planetenradsätze koaxial zueinander und in axialer Richtung hintereinander in einer Reihenfolge "erster, zweiter, dritter, vierter Planetenradsatz" ("RS1, RS2, RS3, RS4") angeordnet sind.

19. Automatgetriebe nach einem der Ansprüche 1 bis 18, **dadurch gekennzeichnet, dass** die Antriebswelle (AN) ständig mit einem drehbaren Rotor (EMR) einer Elektromaschine (EM) verbunden ist.

20. Automatgetriebe nach einem der Ansprüche 1 bis 18, **dadurch gekennzeichnet, dass** das erste Element (SO1) des ersten Planetenradsatzes (RS1) ständig mit einem drehbaren Rotor (EMR) einer Elektromaschine (EM) verbunden ist.

21. Automatgetriebe nach Anspruch 20, **dadurch gekennzeichnet, dass** die Elektromaschine (EM) räumlich gesehen zumindest teilweise in einem Bereich radial über dem zweiten und vierten Schaltelement (B, E) angeordnet ist.

22. Automatgetriebe nach Anspruch 20 oder 21, **dadurch gekennzeichnet, dass** der drehbare Rotor (EMR) der Elektromaschine (EM) über einen Innenlamellenträger des ersten Schaltelementes (C) mit der ersten Element (SO1) des ersten Planetenradsatzes (RS1) verbunden ist.

23. Automatgetriebe nach einem der Ansprüche 1 bis 18, **dadurch gekennzeichnet, dass** die Verbindungswelle (W) ständig mit einem drehbaren Rotor (EMR) einer Elektromaschine (EM) verbunden ist.

24. Automatgetriebe nach Anspruch 23, **dadurch gekennzeichnet, dass** die Elektromaschine (EM) räumlich gesehen in einem Bereich radial über dem ersten Planetenradsatz (RS1) angeordnet ist.

25. Automatgetriebe nach Anspruch 23, **dadurch gekennzeichnet, dass** die Elektromaschine (EM) räumlich gesehen in einem Bereich axial zwischen dem zweiten und dritten Planetenradsatz (RS2, RS3) angeordnet ist.

26. Automatgetriebe nach einem der Ansprüche 1 bis 18, **dadurch gekennzeichnet, dass** die Abtriebswelle ständig mit einem drehbaren Rotor einer Elektromaschine verbunden ist.
